(19) **Europäisches Patentamt European Patent Office Office européen des brevets**

(11) **EP 4 760 381 A1**

(12) **EUROPEAN PATENT APPLICATION**
published in accordance with Art. 153(4) EPC

(43) Date of publication:
**17.06.2026 Bulletin 2026/25**

(21) Application number: **24851406.9**

(22) Date of filing: **18.06.2024**

(51) International Patent Classification (IPC):
**G02F 1/13357** (2006.01)   **F21S 2/00** (2016.01)
**G02B 5/04** (2006.01)   **G02F 1/1335** (2006.01)
**F21Y 115/10** (2016.01)

(52) Cooperative Patent Classification (CPC):
**F21S 2/00; G02B 5/00; G02B 5/04; G02F 1/1335; G02F 1/1336;** F21Y 2115/10

(86) International application number:
**PCT/JP2024/022025**

(87) International publication number:
**WO 2025/032973 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.08.2023 JP 2023131329**

(71) Applicant: **Tsujiden Co., Ltd.**
**Tokyo 168-0072 (JP)**

(72) Inventor: **SAEKI Ryu**
**Tokyo 168-0072 (JP)**

(74) Representative: **Betten & Resch**
**Patent- und Rechtsanwälte PartGmbB**
**Maximiliansplatz 14**
**80333 München (DE)**

(54) **LIGHT CONDENSING-AUXILIARY FILM, EDGE-LIT TYPE BACKLIGHT UNIT HAVING LIGHT CONDENSING-AUXILIARY FILM MOUNTED THEREON, AND LIQUID CRYSTAL DISPLAY DEVICE HAVING EDGE-LIT TYPE BACKLIGHT MOUNTED THEREON**

(57)     [Problem]

To provide an optical film element composed entirely of transparent resin without using light-diffusing fine particles, yet exhibiting no self-moir6 visible to the naked eye. When incorporated into an edge-lit backlight, this optical film element eliminates luminance non-uniformity on the light-emission surface of the backlight and achieves high front-view luminance.

[Solution]

A light-collecting auxiliary film to be interposed between a light-emission surface of a light guide plate and a light-incident surface of a brightness enhancement film (BEF) in an edge-lit backlight unit using discrete LED point light sources. The film comprises: a light waveguide layer composed of a light-transmissive base film; a light extraction layer formed on one surface of the light waveguide layer and having a plurality of inverted quadrangular-pyramidal unit concave portions; and a light introduction layer formed on the other surface of the light waveguide layer and having a plurality of unit triangular prisms extending parallel in one direction.

The light extraction layer constitutes a light-emission surface, and prism surfaces of the plurality of unit triangular prisms constituting the light introduction layer constitute a light-incident surface. A direction of ridges of the plurality of unit concave portions and a direction of ridges of the plurality of unit triangular prisms intersect at an angle of 42° to 48°. None of the light extraction layer, the light waveguide layer, and the light introduction layer contain light-diffusing fine particles, and self-moiré caused by the plurality of unit concave portions and the plurality of unit triangular prisms is not visible to the naked eye.

Fig. 1

**Description**

[Technical Field]

The present invention relates to a light-collecting auxiliary film intended for use in an edge-lit backlight, an edge-lit backlight unit equipped with the light-collecting auxiliary film, and a liquid crystal display device equipped with the edge-lit backlight.

[Background Art]

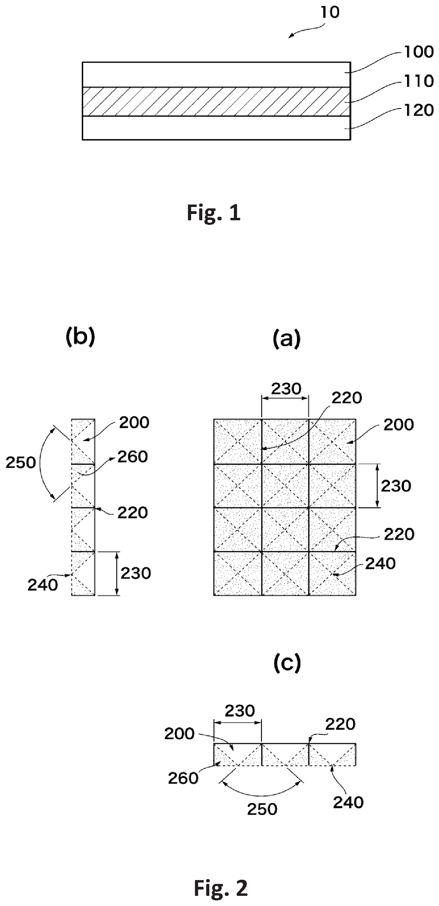

Liquid crystal display devices are widely used in various information devices and are broadly classified into a direct-lit type and an edge-lit type based on their basic structures. In the former type, a light source is disposed on the rear side of a backlight unit mounted in a liquid crystal display device. In the latter type, a light source is disposed on a side surface of a light guide plate constituting a part of a backlight unit (commonly referred to as an "edge-lit backlight"). Edge-lit backlights are categorized into a CCFL (cold cathode fluorescent lamp) type and a white LED point light source type depending on the type of light source used therein. In accordance with recent trends toward miniaturization, weight reduction, and improved power consumption efficiency, the white LED point light source type is becoming predominant.
Common basic components of such a white LED point light source type edge-lit backlight include a light source, a light guide plate, a light propagation characteristic adjustment film (which has various names depending on its main function, such as a "light shaping sheet" or simply a "light diffusion film"), and a BEF (brightness enhancement film). Commercially available products (predominantly those manufactured by 3M) are generally used as the BEF. To date, it has been rare for backlight manufacturers, light guide plate manufacturers, or light propagation characteristic adjustment film manufacturers to develop alternatives to these BEFs. In such a configuration, diffuse white light from a light source (white LED) generally enters a side surface of the light guide plate in a horizontal direction, and its propagation direction is changed (deflected) by reflection and diffusion caused by light-diffusing dots disposed under the light guide plate. The functional characteristics of the light guide plate are controlled such that the light is emitted from the upper surface of the light guide plate (the surface facing the BEF) as light having a light intensity angular distribution with a peak, such as a Gaussian distribution. Such control methods vary among companies and are akin to proprietary know-how. In the case of a backlight in a large liquid crystal panel for a liquid crystal TV or the like, it is said that the diffusion degree is insufficient with only the light emitted from the emission surface of the light guide plate. Therefore, a film for assisting the light diffusion function (light diffusion film) is further interposed between the light guide plate and the BEF (see, for example, FIG. 1 of Patent Document 1).
In recent years, as liquid crystal panels have been miniaturized, the number of pixels has increased dramatically. This has caused such a problem as that the transmittance of light from a light source is significantly reduced, resulting in insufficient front-view luminance of the liquid crystal panel. In an edge-lit backlight used in such a case, it is said that luminance non-uniformity is less likely to occur compared to a direct-lit backlight due to the function of the light guide plate described above. Therefore, the required optical characteristics are focused on the intensity of the front-view luminance in the backlight. To address such issues, while edge-lit backlights equipped with white LED light sources are attracting attention, improvements to light guide plates for such types of backlights are being vigorously pursued. In such improved light guide plates, light-reflecting dots are optimally arranged on the lower surface side thereof, and optical elements having a function of collecting light reflected by the dots are formed on the upper surface on the light-emission surface side. Furthermore, light guide plates have been proposed in which the optical elements constitute a unique spatial arrangement not seen conventionally. As a result, the light emitted from the light-emission surface side of the optical elements disposed on the upper surface of the light guide plate has relatively higher directivity than the light emitted from conventional pseudo-planar light emitters. However, even with such a light guide plate, the propagation direction and shape of the light emitted therefrom have not reached optimal matching with a light-collecting film called a BEF (Brightness Enhancement Film). Consequently, scattering loss occurs in the light propagation process, and the front-view luminance of the backlight does not sufficiently satisfy market needs.
The applicant has conventionally manufactured and sold light diffusion films for backlights, and has separately invented and filed a patent application for a novel optical film (light diffusion film) for a direct-lit point light source (Japanese Patent Application No. 2023-78133). This invention focuses on the interrelationship between the refractive indices of respective layers of a three-layer structure film that includes light-diffusing fine particles and includes a triangular prism layer on a light-incident surface side. Although this invention is for a direct-lit point light source and not for an edge-lit backlight, various findings were obtained in the process of achieving the invention.
Under the background described above, the applicant received a request to develop a new light diffusion film for an edge-lit backlight unit. The applicant studied the development of a novel light diffusion film for an edge-lit backlight unit by utilizing the technical idea of the aforementioned invention and conducted repeated hearings. As a result, the applicant has found for the first time that the propagation direction and shape of the light emitted from the upper surface of the latest-model light guide plate do not optimally match a light-collecting film called a BEF (Brightness Enhancement Film).

Furthermore, through simulations using a computer or the like, it was found that as for the optical characteristics required for an optical film element under the above-mentioned special environment of use (i.e., an environment in which the element is interposed between a light guide plate and a BEF), it is important to change the angle of the propagation direction of light emitted from the light guide plate while collecting the light, so as to cause the light to be incident on the BEF at an optimal angle for the BEF. It was also found that this minimizes the loss of light quantity in the light propagation path, thereby increasing the front-view luminance from the backlight.

Based on the findings as described above, while examining material design based on the characteristics required for a desirable optical film element, it has become clear that in order to increase the front-view luminance from the backlight, it is necessary to minimize the haze value of the optical film element interposed between the light guide plate and the BEF. To satisfy this requirement, it has become clear that it is necessary to not use any commonly used light-diffusing fine particles that lead to an increase in haze value.

On the other hand, the applicant possesses various insights accumulated during the manufacturing process of optical films that are suitable for low-cost mass production and include a triangular prism layer on a light-incident surface side, such as the invention described in the applicant's Japanese Patent Application No. 2023-78133, which uses light-diffusing fine particles. Based on such insights, in the course of repeated research, the applicant discovered a potential problem: while modern light guide plates have become capable of performing more efficient light guiding and light extraction, the use of a film employing scattering on top of such an efficient light guide plate results in additional scattering loss. Furthermore, the applicant examined technologies that are most cost-effective among currently available mass production technologies and that most faithfully satisfy the above-mentioned requirements. As a result, the applicant conceived that a combination of controlling the refractive index of a material used for an optical film element interposed between a light guide plate and a BEF and controlling the surface shape of the optical film element is optimal for achieving the function of collecting light emitted from the light guide plate while changing the angle of its propagation direction with the minimum number of optical elements, leading to the lowest cost.

Therefore, in the process of conducting repeated studies to develop an optical film element for an edge-lit backlight that does not contain any light-diffusing fine particles, the applicant examined prior patent literature. As a result, the applicant found that in an optical film element having such a basic configuration, there is a problem of the appearance of moiré fringes due to a self-moiré phenomenon occurring in a single optical film element, as taught, for example, in Patent Document 1 (International Publication No. WO 2010/029910).

Against the background described above, an object of the present invention is to provide a film-like optical element to be interposed between a light guide plate and a BEF of an edge-lit backlight, the film-like optical element being capable of solving (or expected to solve) the following problems (satisfying the following required characteristics):

1) The number of elements constituting the film-like optical element is as small as possible;
2) No light-diffusing fine particles are contained in any of the elements constituting the film-like optical element;
3) Desired optical characteristics are obtained while having a configuration in which self-moiré is not visible to the naked eye; and
4) The film-like optical element is suitable for mass production by a roll-to-roll method and is low-cost.

[Prior Art Documents]

[Patent Documents]

[Patent Document 1] International Publication No. WO 2010/029910

[Summary of the Invention]

[Technical Problem to be Solved by the Invention]

Accordingly, the inventors of the present invention have conducted extensive research to provide an optical film element (hereinafter referred to as a "light-collecting auxiliary film") that is low-cost, contains no light-diffusing fine particles, and has a configuration in which self-moiré is not visually recognizable to the naked eye, while achieving a front-view luminance as a backlight high enough for practical use and controlling luminance non-uniformity to a level acceptable for practical use. In developing the light-collecting auxiliary film according to the present invention, it is a premise that no light-diffusing fine particles are contained. Since such an optical film becomes transparent to the point where haze is not visually recognizable to the naked eye, countermeasures against self-moiré become the most significant issue. The inventors have completed the present invention as a result of intensive research based on an unconventional idea that even if self-moiré theoretically occurs, the moiré fringes should not be visually recognizable to the naked eye if the intervals between the moiré lines are equal to or less than a predetermined distance.

Specifically, a first aspect of the present invention is a light-collecting auxiliary film to be interposed between a light-emission surface of a light guide plate and a light-incident surface of a brightness enhancement film (BEF) in an edge-lit backlight unit using discrete LED point light sources, the light-collecting auxiliary film comprising:

a light guide layer comprising a light-transmissive base film;
a light extraction layer formed on one surface of the light guide layer and having a plurality of unit concave portions in the shape of inverted quadrangular pyramids; and
a light introduction layer formed on the other surface of the light guide layer and having a plurality of unit triangular prisms extending parallel in one direction, wherein the light extraction layer constitutes a light-emission surface, prism surfaces of the plurality of unit triangular prisms constituting the light introduction layer constitute a light-incident surface,
none of the light extraction layer, the light guide layer, and the light introduction layer contains light-diffusing fine particles, and
a relationship between a pitch P1 of the plurality of unit concave portions and a pitch P2 of the plurality of unit triangular prisms satisfies P1 > P2 and all of the following conditions:

$$[\text{Math. 1}] \quad |D1 - D2| \leq 200 \ \mu m$$

In the foregoing Math. 1, D1 and D2 satisfy the following Math. 2a and Math. 2b, respectively:

$$[\text{Math. 2a}] \quad D1 = |P1m \times \delta1 \div (\delta1 - P1m)|$$

$$[\text{Math. 2b}] \quad D2 = |P1m \times \delta2 \div (\delta2 - P1m)|$$

In the foregoing Math. 2a and Math. 2b, P1m > P2m, where P1m satisfies the following Math. 3a, and P2m satisfies the following Math. 3b:

$$[\text{Math. 3a}] \quad P1m = P1 \times \sin(0.25 \times \pi)$$

$$[\text{Math. 3b}] \quad P2m = P2 \div 2$$

In the foregoing Math. 2a and Math. 2b:

1) $\delta1$ is a sum of P1m and the smaller of $\delta a$ and $\delta b$, where $\delta a$ is an absolute value of a difference between P1m and a value obtained by multiplying P2m by an integer part (with rounding up) of a value obtained by dividing P1m by P2m, and $\delta b$ is an absolute value of a difference between P1m and a value obtained by multiplying P2m by an integer part (with rounding down) of a value obtained by dividing P1m by P2m; and
2) $\delta2$ is a sum of P1m and a smaller value obtained when comparing twice the smaller of $\delta a$ and $\delta b$ with the larger of $\delta a$ and $\delta b$.

A second aspect of the present invention is a light-collecting auxiliary film to be interposed between a light-emission surface of a light guide plate and a light-incident surface of a brightness enhancement film (BEF) in an edge-lit backlight unit using discrete LED point light sources, the light-collecting auxiliary film comprising:

a light guide layer comprising a light-transmissive base film;
a light extraction layer formed on one surface of the light guide layer and having a plurality of unit concave portions in the shape of inverted quadrangular pyramids; and
a light introduction layer formed on the other surface of the light guide layer and having a plurality of unit triangular prisms extending parallel in one direction,
wherein the light extraction layer constitutes a light-emission surface, prism surfaces of the plurality of unit triangular prisms constituting the light introduction layer constitute a light-incident surface, none of the light extraction layer, the light guide layer and the light introduction layer contains light-diffusing fine particles,
an intersection angle between a direction of ridges of the plurality of unit concave portions and a direction of ridges of the plurality of unit triangular prisms falls within a range of 42° to 48°, and moiré fringes caused by the plurality of unit concave portions and the plurality of unit triangular prisms are not visually recognizable to the naked eye.

A third aspect of the present invention is characterized in that, in the second invention, the relationship between the pitch P1 of the plurality of unit concave portions and the pitch P2 of the plurality of unit triangular prisms satisfies P1 > P2.

A fourth aspect of the present invention is characterized in that, in the first or third invention, an apex angle of the plurality of unit concave portions is less than 100°.

A fifth aspect of the present invention is characterized in that, in the fourth invention, a relationship of $n0 \geq n1$ and $n0 \geq n2$ is satisfied, when n1 is a refractive index of a resin constituting the light extraction layer, n2 is a refractive index of a resin constituting the light introduction layer, and n0 is a refractive index of a resin constituting the light guide layer.

A sixth aspect of the present invention is characterized in that, in the fifth invention, the refractive index n1 is in a range of $1.50 \leq n1 \leq 1.64$, and the refractive index n2 is in a range of $1.50 \leq n2 \leq 1.64$.

A seventh aspect of the present invention is characterized in that, in the sixth invention, an apex angle of the plurality of triangular prisms is 95° or less.

An eighth aspect of the present invention is characterized in that, in the seventh invention, the apex angle of the plurality of unit concave portions is 80° or more and 95° or less.

A ninth aspect of the present invention is an edge-lit backlight unit comprising a plurality of point light sources, a light guide plate, and a brightness enhancement film (BEF), characterized in that at least one light-collecting auxiliary film according to any one of the first to eighth inventions is interposed between the light guide plate and the brightness enhancement film (BEF).

A tenth aspect of the present invention is characterized in that, in the ninth invention, the plurality of point light sources are arranged on at least one edge side of the light guide plate.

An eleventh aspect of the present invention is a liquid crystal display device comprising the edge-lit backlight unit according to the tenth invention and a liquid crystal display panel.

[Effects of Invention]

The light-collecting auxiliary film according to the present invention is expected to function as an optical film element that contains no light-diffusing fine particles, suppresses the appearance of self-moiré (the appearance of a degree visually recognizable to the naked eye), achieves a front-view luminance as a backlight high enough for practical use, and controls luminance non-uniformity to a level acceptable for practical use. Furthermore, the film can be manufactured by a roll-to-roll method suitable for mass production using a roll mold, which is expected to increase the ease of manufacturing and reduce manufacturing costs.

Additionally, these effects are expected to contribute to cost reduction of edge-lit backlight units equipped with the light-collecting auxiliary film of the present invention and, by extension, liquid crystal display devices.

[Brief Description of Drawings]

In the respective drawings described below, components assigned the same reference numerals are the same components.

[FIG.1] FIG.1 is a conceptual diagram showing a cross-section of a light-collecting auxiliary film according to the present invention.

[FIG.2] FIG.2 is a conceptual diagram showing a front view (a) and cross-sectional views (b and c) of a light extraction layer 100 on a light-emission surface side of a light-collecting auxiliary film 10 according to the present invention. Reference numeral 200 denotes a unit concave portion (void portion), 220 denotes a ridge, 240 denotes the deepest point of the unit concave portion (which is a center point of the concave portion and an apex of an inverted pyramid, and is thus referred to as an "inverted apex"), and 260 denotes a solid portion defining the unit concave portion.

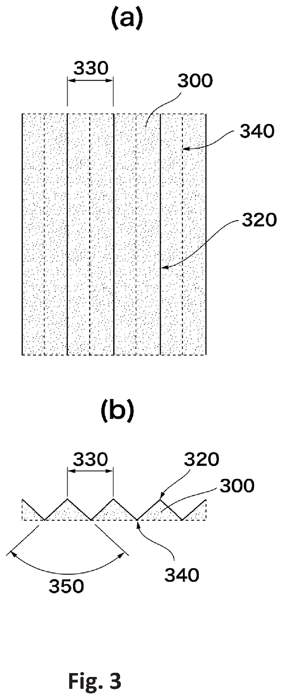

[FIG.3] FIG.3 is a conceptual diagram showing a front view (a) and a cross-sectional view (b) of an array of unit triangular prisms 300 constituting a light introduction layer 120 on a light-incident surface side of the light-collecting auxiliary film 10 according to the present invention. Reference numeral 300 denotes a unit triangular prism, 320 denotes a ridge of the unit triangular prism, and 340 denotes a valley line formed by adjacent unit triangular prisms.

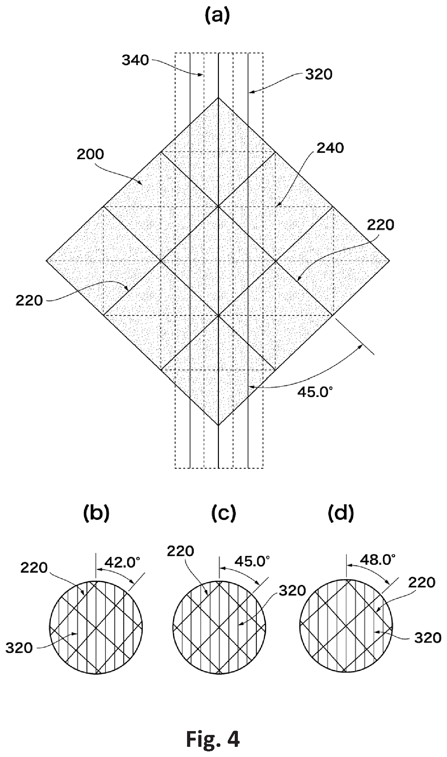

[FIG.4] FIG.4 is a diagram showing a relationship between an arrangement direction of unit concave portions 200 (substantially inverted pyramids) constituting the light extraction layer 100 on the light-emission surface side of the light-collecting auxiliary film 10 of the present invention and a longitudinal direction of unit triangular prisms (convex portions) constituting the light introduction layer 120 on the light-incident surface side. In FIG.4, valley lines 340 in the array of the unit triangular prisms 300 of the light introduction layer 120 are indicated by dashed lines. FIG.4(a) shows a case where these two directions intersect at 45°. This state is shown in FIG.4(c) by another simplified representation method. FIG.4(c) shows a state in which the light extraction layer 100 is positioned on top and the light introduction layer 120 is positioned on the bottom. FIGS.4(b) and 4(d) show states where the intersection angle is 42° and 48°, respectively.

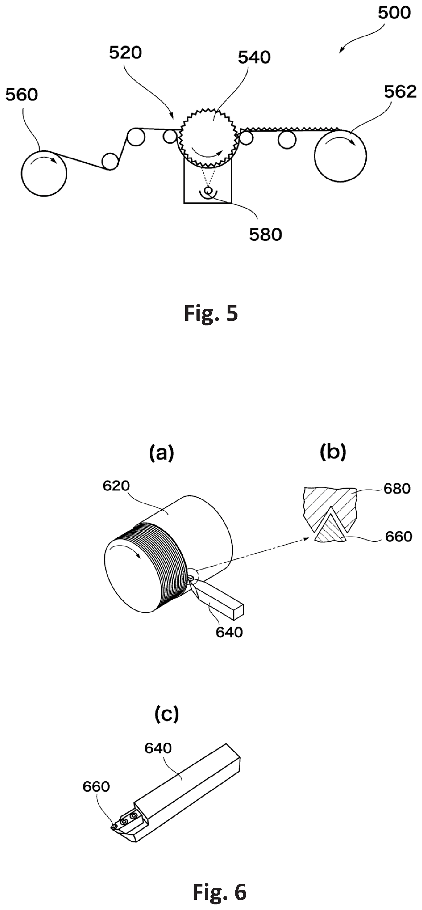

[FIG.5] FIG.5 is a reference diagram of a known general roll-to-roll manufacturing system. Although this is outside the scope of the present invention, it is provided for explaining a preferred range of a concavo-convex shape on a surface of the light-collecting auxiliary film of the present invention; therefore, reference numerals for components other than main components are omitted.

[FIG.6] FIG.6 is a conceptual diagram of a general method for manufacturing a roll mold used for manufacturing the light-collecting auxiliary film 10 of the present invention by a cutting method. (a) is a conceptual diagram illustrating a state where a cutting tool 640 having a single-crystal diamond 660 at a tip thereof cuts a roll mold, on which a metal thin film 680 (typically a copper metal film) is formed, at an apex angle $\theta$; and (b) is an enlarged cross-sectional view illustrating a state where the single-crystal diamond 660 cuts the thin film 680. (Note that although the content is outside the scope of the present invention, it is provided to explain a preferred range of the concavo-convex shape on the surface of the light-collecting auxiliary film of the present invention; therefore, reference numerals for components other than the main components are omitted.)

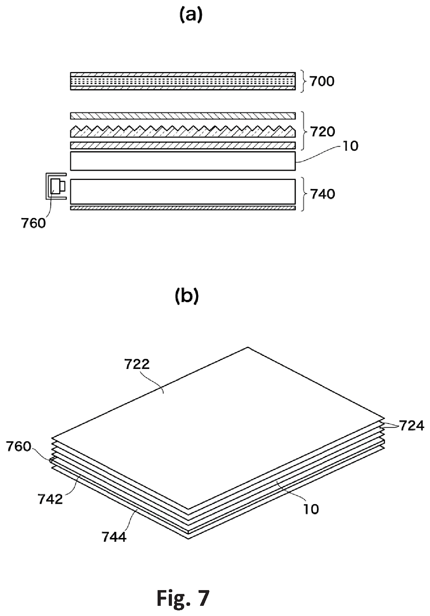

[FIG.7] FIG.7(a) is a conceptual cross-sectional view of an example of an edge-lit backlight incorporating the light-collecting auxiliary film 10 of the present invention. Reference numeral 700 denotes a liquid crystal panel, reference numeral 720 denotes an entire structure of two orthogonally stacked BEFs and a light diffusion film laminated thereon, reference numeral 10 denotes the light-collecting auxiliary film of the present invention, reference numeral 740 denotes a light guide plate unit having a reflective sheet on a lower surface side thereof, and reference numeral 760 denotes white LEDs. The white LEDs 760 are arranged discretely in a row along a side surface of the light guide plate unit 740 in a depth direction of the drawing. FIG.7(b) is a conceptual diagram illustrating a stacked state of respective layers with the liquid crystal panel 700 in FIG.7(a) removed. The layers are stacked in an order of a reflective sheet 744, a light guide plate 742, the light-collecting auxiliary film 10 of the present invention, two orthogonally stacked BEFs 724, and a light diffusion film 722 from a bottom side toward a top side.

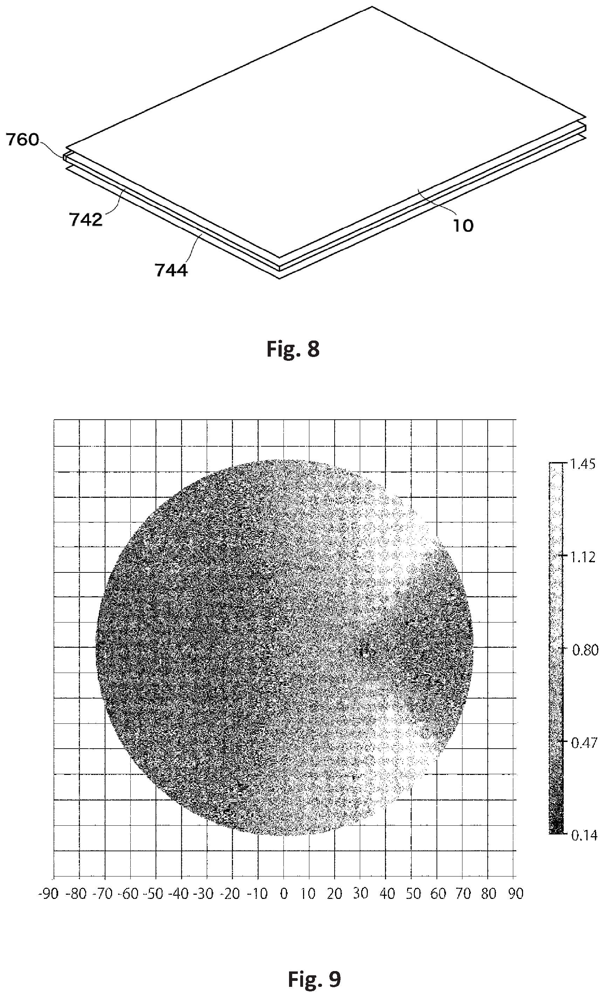

[FIG.8] FIG.8 is a conceptual configuration diagram of optical elements used for light intensity peak measurement (using Mini-Diff V2) in the examples and comparative examples. In a stacked structure, a reflective sheet 744, a light guide plate 742, and the light-collecting auxiliary film 10 of the present invention are stacked from a bottom side toward a top side. A plurality of white LEDs 760 are arranged on a side surface of the light guide plate 742.

[FIG.9] FIG.9 illustrates a contour plot of the light-emission surface of the light-collecting auxiliary film of the present invention when a combination of shape characteristics and refractive indices of the light-collecting auxiliary film matches those described in Table 1. In this case, an optical axis of light emitted from the white LEDs is parallel to a straight line that passes through a center of a circular region in the contour plot and extends horizontally from left to right in the drawing.

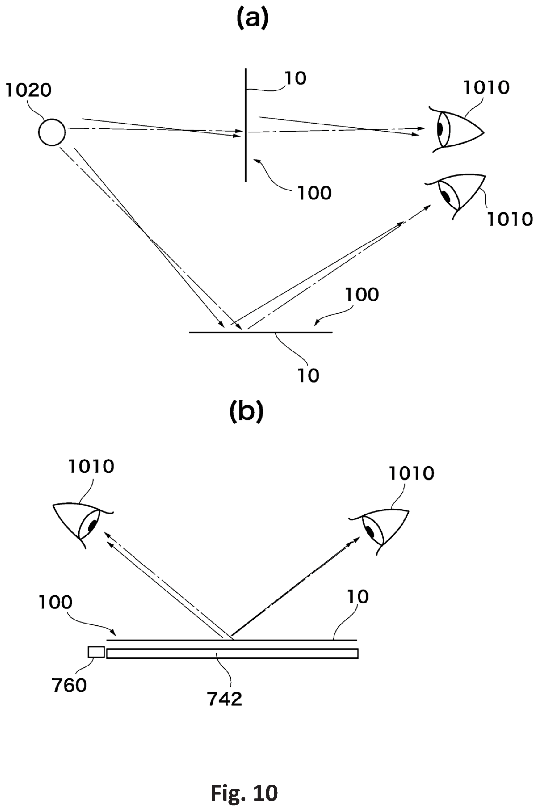

[FIG.10] FIG.10 is a conceptual diagram illustrating a method for visually determining self-moiré. FIG.10(a) is a conceptual diagram of measurement conditions in a case where a determination result is "∘" (Good), and FIG.10(b) is a conceptual diagram of measurement conditions in a case where a determination result is "Δ" (Acceptable) or "✕" (Poor).

[Description of Embodiments]

(Embodiments)

The present invention will be described in detail below with reference to embodiments and the drawings. Note that the present invention is not limited to the following embodiments and can be modified as desired within the scope of the object and spirit of the present invention.

Throughout this specification:

1) "Light-collecting" (or "light-focusing") in the present invention means collecting diffused light from a light source (e.g., light emitted from a light guide plate) and deflecting the light in a desired direction for propagation. However, the meaning of "collecting" here is not strictly limited and includes cases where a slight partial diffusion phenomenon occurs depending on characteristics such as a direction or an intensity angular distribution of incident light.

2) "Film" includes not only a film in a strict sense defined by thickness, but also a relatively thick material generally referred to as a "sheet."

3) "Self-moiré" refers to moiré (moiré fringes) occurring in a single transparent film-like optical element (or optical film element). Moiré includes parallel moiré and rotational moiré. In the present invention, within the scope of the configurations thereof, rotational moiré did not appear (i.e., was not visually recognizable to the naked eye) in any of the examples; therefore, "moiré" referred to below means parallel moiré. Note that, in the present invention, it is stated that "moiré appears" when a moiré phenomenon is visually recognizable to the naked eye, and "moiré does not appear" when it is not visually recognizable, which is not based on a theoretical perspective.

4) "Convex stripe" means a convex protrusion extending continuously in one direction with a constant cross-sectional shape, and "concave stripe" means a concave depression extending in one direction with a constant cross-sectional shape. Here, the "one direction" is not necessarily limited to a direction defined by a continuous straight line, but may also include a direction defined by a continuous curve.

5) "Substantially parallel" means that ridges of a plurality of convex stripes or valley lines of a plurality of concave stripes are substantially parallel from a practical standpoint. Here, "substantially" means within a range that does not hinder the achievement of the object of the present invention.

6) "Substantially quadrangular pyramid" or "substantially inverted pyramid" includes not only a true inverted quadrangular pyramid but also what can be considered as an inverted quadrangular pyramid or an inverted pyramid from a practical standpoint within a range of unavoidable shape variations caused by processing accuracy in industrial production. For example, even an "inverted quadrangular frustum" having a flat top is included in the "substantially inverted pyramid" if the top area is small, provided that the achievement of the object of the present invention is not hindered.

7) "Refractive index" means a refractive index measured at a measurement wavelength of 589 nm using an Abbe refractometer (NAR-1T SOLID), manufactured by Atago Co., Ltd.). Hereinafter, it is represented by the symbol nD. Although the refractive index is expressed as a numerical value with two decimal places, this does not necessarily mean that the digits after the second decimal place are zero; the value includes a range centered on the second decimal place and extending from less than one unit above to more than one unit below the last displayed digit.

8) "Apex angle" means the apex angle illustrated in FIG. 2 and FIG. 3. The angle was measured by magnifying a transfer surface 2,400 times using a laser microscope (VK-X1000, manufactured by Keyence Corporation). Although the apex angle is described without decimal places, this does not mean that the value after the decimal point is zero, but includes a value obtained by rounding off a value one digit below the displayed value.

The light-collecting auxiliary film according to the present invention is a film-like optical element (optical film element) to be interposed between a light guide plate (also referred to as a light guide sheet or a light guide film) and a BEF (Brightness Enhancement Film) in an edge-lit backlight, for the purpose of collecting light emitted from an upper surface of the light guide plate and deflecting (sometimes referred to as "lifting") a propagation direction of the collected light into a direction optimal for the BEF. A primary feature of the present invention is that this function can be achieved solely by a specific combination of surface shapes and refractive indices without relying on volume diffusion (e.g., light diffusion by light-diffusing fine particles) (i.e., without using light-diffusing fine particles). Furthermore, the present invention can suppress or avoid self-moiré, which generally occurs when light-diffusing fine particles are not used, and is capable of mass production by a roll-to-roll method. Details will be described below.

1. Overall Configuration of Light-Collecting Auxiliary Film

FIG.1 shows a conceptual diagram of a cross-sectional configuration of a light-collecting auxiliary film 10 according to the present invention. As shown in FIG.1, the light-collecting auxiliary film 10 according to the present invention has a three-layer structure including a light extraction layer 100, a light guide layer 110, and a light introduction layer 120, and the respective layers are integrated in close contact with each other. Here, the light extraction layer 100 constitutes a light-emission surface (the upper side of the drawing), and the light introduction layer 120 constitutes a light-incident surface (the lower side of the drawing). That is, the light-collecting auxiliary film 10 has the light introduction layer 120 on a side facing a light guide plate (not shown) (a side closer to the light guide plate), and has the light extraction layer 100 on a side opposite to the light guide plate (a side farther from the light guide plate). In FIG. 1, solid lines extending horizontally are drawn between these layers, which may give an impression as if flat and distinct boundary surfaces are formed between the respective layers. However, these boundary surfaces do not necessarily have to be flat, and a certain degree of intermingling between the layers is permissible as long as it does not affect the achievement of the object of the present invention. In particular, if the refractive indices of the layers facing each other across a boundary surface are the same, they can be treated as being optically identical in the present invention; therefore, in such a case, a certain degree of intermingling is even more permissible. Although the light extraction layer 100 serves as the light-emission surface and the light introduction layer 120 serves as the light-incident surface in the present embodiment, the light extraction layer 100 may serve as the light-incident surface and the light introduction layer 120 may serve as the light-emission surface instead, as long as it does not affect the achievement of the object of the present invention.

2. Geometric Characteristics of Respective Layers Constituting Light-Collecting Auxiliary Film (Geometric Characteristics of Light Extraction Layer)

The light extraction layer 100, which serves as the light-emission surface of the light-collecting auxiliary film, is composed of an array of units having a plurality of substantially inverted quadrangular-pyramidal (inverted pyramidal) unit concave portions 200. Hereinafter, for convenience, the term "unit concave portion" and the term "inverted pyramid" are used interchangeably in this specification. Since both terms refer to a void portion, for convenience, the void portion of the concave portion and a solid portion defining the void portion are also treated as being interchangeable, and these terms shall be appropriately interpreted according to the context in which they are used.

FIG.2(a) shows a front view of one section of the light extraction layer 100. Although this figure illustrates a front view of one section in which twelve of the plurality of unit concave portions 200 constituting the light extraction layer 100 are two-dimensionally arranged, this is merely for the purpose of explanation. In reality, an extremely large number of inverted pyramidal unit concave portions 200, which are too small to be seen with the naked eye, are formed. Upper ends (upper ends on the front side toward the drawing) of the inverted pyramidal unit concave portions 200 constitute rectangular ridges 220. However, these ridges 220 are merely conceptual lines, and the width thereof is preferably as close to zero as possible in practice. In the present invention, a distance between lines formed by connecting the ridges 220 of the respective unit concave portions 200 in the same direction is referred to as a pitch P1 (reference numeral 230) of the unit concave portions 200.

A center point of a region occupied by the unit concave portion 200 in the drawing is located directly above a bottom center point 240 of the unit concave portion 200. Since the bottom center point 240 is also an apex of the inverted pyramid constituting the unit concave portion 200 including the same, it is hereinafter referred to as an "inverted pyramid apex" for convenience. The drawing also illustrates lines connecting the inverted pyramid apex 240 and the respective corners of the rectangular base of the inverted pyramid 200. However, these lines are also merely conceptual lines, and the width thereof is preferably as close to zero as practically achievable.

Furthermore, a surface exposed in each unit concave portion 200 (an inclined surface of the inverted pyramid) is preferably a mirror-finished surface as much as practically achievable. This is for the purpose of suppressing the occurrence of unnecessary scattering and minimizing the loss of transmitted light quantity when the light is deflected and concentrated in a predetermined direction due to a difference in refractive index at an interface between the exposed surface and air.

FIG.2(b) is a cross-sectional view taken along a section passing through the bottom center point 240 (inverted pyramid apex) of each unit concave portion 200 in the vertical direction of the drawing, and FIG.2(c) is a cross-sectional view taken along a section passing through the same in the horizontal direction. In each cross-sectional view, a portion hatched with dots represents a solid portion, and a white portion represents a void portion (i.e., an exposed portion). In the cross-sectional view of FIG.2(b), a solid line extending in the vertical direction on the right side is a conceptual line representing a plane passing through an upper end of the light extraction layer 100 (an upper end surface on the light-emission surface side). A solid line extending in the horizontal direction is also a conceptual line representing a boundary between the respective unit concave portions 200; however, since the solid portions of all the unit concave portions 200 are formed of the same material, this boundary is also merely conceptual. Similarly, in the cross-sectional view of FIG. 2(c), a solid line extending in the horizontal direction is a conceptual line representing a plane passing through the upper end of the light extraction layer 100 (the upper end surface on the light-emission surface side), and a solid line extending in the vertical direction represents the boundary between the respective unit concave portions 200. Since the solid portions of all the unit concave portions 200 are formed of the same material, this boundary is also merely conceptual.

An apex angle of the unit concave portion 200 in the present invention refers to an angle $\theta 1$ illustrated in the cross-sectional view of FIG.2(b) or 2(c). Specifically, in a cross-section that passes through the respective bottom center points 240 (inverted pyramid apexes) of two adjacent unit concave portions 200 sharing a common ridge and that is orthogonal to the common ridge, the apex angle $\theta 1$ (reference numeral 250) refers to an apex angle of a triangular region 260 (the triangular region 260 hatched with dots in FIG.2(b)) occupied by the solid portion. In the present invention, as shown in the drawings, since the top view of the unit concave portion 200 is a quadrangular, the apex angle $\theta 1$ is the same in both the vertical and horizontal directions of the drawing, which is evident from a comparison between FIGS. 2(b) and 2(c).

A preferred shape of the unit concave portion (substantially inverted quadrangular-pyramidal unit concave portion) 200 is a quadrangular at the upper end thereof, having a side length of $19\mu m$ to 65um, preferably $29\mu m$ to 55um, and more preferably 39um to 45um. Within such ranges, it is expected that a desired substantially inverted quadrangular-pyramidal unit concave portion can be cut and processed with a single-crystal diamond tool in a manufacturing process of a roll mold. Further, a preferred depth of the unit concave portion 200 is $11\mu m$ to 39um, preferably $12\mu m$ to 33um, and more preferably $16\mu m$ to 27um. The ranges of the side length and the depth are preferred ranges determined based on evaluation of optical characteristics of the light-collecting auxiliary film 10.

A thickness of the light extraction layer 100, which is composed of the unit concave portions 200, is a value obtained by adding a slight value $+\alpha$ to the depth of the unit concave portion 200. This $+\alpha$ corresponds to a thickness of what is called a "residual film" in the art (which is integrated with the light extraction layer and formed of the same material), provided to make the height of the inverted apex of the unit concave portion 200 slightly higher than an upper surface (light-emission side surface) of a light waveguide layer 110 (to be described later) disposed therebelow. This residual film has a value of approximately $1\mu m$ to 3um. This value is derived from an empirical rule that without this residual film, the shape of the unit concave portion 200 (particularly the inclined surface) is easily deformed, making it difficult to accurately maintain the shape of the unit concave portion 200 during mass production. Specifically, the thickness of the light extraction layer 100 is 12μm to 42μm, preferably 13μm to 36μm, and more preferably 17μm to 30μm.

The apex angle of the unit concave portion 200 is less than 100°, preferably 80° to 95°, and more preferably 85° to 95°. The upper and lower limits here are preferred values determined from the viewpoint of desired optical characteristics and the manufacturing cost of a roll mold described later.

When the shape of the upper end of the unit concave portion 200 is quadrangular, the side length thereof is equal to the pitch P1. In a cross-section that is perpendicular to a plane passing through the apexes 240 of two adjacent unit concave portions 200 and that passes through the apexes 240, a solid portion 260 formed by the two adjacent unit concave portions 200 connected to each other exhibits a triangular shape, and a base length thereof is equal to the pitch P1.

(Refractive Index of Light Extraction Layer)

A refractive index $n1$ of a resin (cured resin) constituting the light extraction layer satisfies a relationship of $n0 \geq n1$ with respect to a refractive index n2 of a resin (cured resin) constituting a light introduction layer described later and a refractive index n0 of a light waveguide layer (a layer between the light extraction layer and the light introduction layer) described later, and preferably satisfies $1.50 \leq n1 \leq 1.64$. The upper and lower limits here are preferred values determined from the viewpoint of desired optical characteristics and the following considerations.

In a case where a UV-curable resin as described below is used as a material, if the refractive index nD is 1.58 or more, it is common to add nanofillers that impart a high refractive index, such as TiO2 or ZrO2, to the resin to increase the refractive index. However, since the highrefractive-index nanofillers themselves are basically expensive, the cost of the coating material tends to be very high, which is not preferable in practice. Furthermore, if the refractive index nD is 1.64 or more, the amount of nanofiller added becomes excessively large, which increases the viscosity and tends to cause unevenness (e.g., thickness non-uniformity) when the monomer is applied to a base film. Also, aggregation of the nanofiller is likely to occur, which tends to cause cloudiness of the coating film and a decrease in transmittance, which is not preferable in practice. In addition to these practical problems, if the refractive index is increased through the resin composition without using TiO2 or ZrO2, the coating film tends to become very brittle, leading to a practical problem that the film after shaping is difficult to handle (e.g., easily scratched).

On the other hand, conversely, to achieve a refractive index nD = 1.52 or less, it is common to decrease the refractive index by adding a nanofiller such as BaF2 to a monomer or by incorporating fluorine into monomer molecules. In either case, the cost inevitably increases, and there is a practical problem that the coating film becomes too soft, making it difficult to handle the film after shaping (curing).

(Material and Formation Method of Light Extraction Layer)

Basically, any UV-curable transparent resin can be preferably used as long as it has the refractive index defined by the present invention. Note that "transparent" here does not refer to transparency in a strict sense, but means a state in which the haze value is low (e.g., 2% to 3% or less) and can be considered transparent in practice. For manufacturing, a known roll-to-roll continuous production method (see FIG.5 for reference) is preferably employed. A resin constituting each of the light extraction layer and the light introduction layer is applied in an uncured state onto one surface of a base film or a base sheet constituting the light waveguide layer to form a coating layer. A roll mold having a fine concavo-convex pattern (pyramid-shaped concavo-convex pattern) on a surface thereof is pressed against the surface of the coating layer to transfer the concavo-convex pattern of the roll mold, and the transferred portions are sequentially irradiated with ultraviolet (UV) rays, whereby the layers are preferably formed. The principle of the process for transferring the concavo-convex pattern of the roll mold can also be applied to a micro-imprinting process of a plastic film. Therefore, it is also conceivable to form the light extraction layer and the light introduction layer having desired surface shapes by micro-imprinting onto surfaces of a three-layer structure film in which transparent thermoplastic resin films respectively constituting the light extraction layer and the light introduction layer are bonded in advance to the base film constituting the light waveguide layer.

(Basic Function of Light Extraction Layer)

A function of the light extraction layer is to further lift the light from a light waveguide layer (to be described later) (i.e., to bring the light direction closer to a vertical direction) to cause the light to be incident on the BEF at an incident angle favorable for the BEF. This contributes to the improvement of front-view luminance through a synergistic effect with the BEF.

(Geometric Characteristics of Light Introduction Layer)

A light introduction layer 120, which serves as a light-incident surface of the light-collecting auxiliary film, is composed of a triangular prism layer having a plurality of unit triangular prisms 300 extending in a predetermined direction. FIG.3(a) illustrates a top view of one section of the light introduction layer 120. Although FIG.3(a) illustrates a top view of one section in which four of the plurality of unit triangular prisms 300 constituting the light introduction layer 120 are arranged in parallel, this is merely for the purpose of explanation. In reality, an extremely large number of unit triangular prisms 300, which are too narrow to be visually recognizable to the naked eye, are formed. An apex portion of each unit triangular prism 300 constitutes a ridge 310. The ridge 310 is merely a conceptual line, and a width thereof is preferably as close to zero as practically achievable. In the present invention, a distance between the ridges 310 of the respective unit triangular prisms 300 is referred to as a pitch P2 (reference numeral 330) of the unit triangular prisms 300.

In FIG.3(a), boundary lines are illustrated between the adjacent unit triangular prisms 300; however, these boundary lines are also merely conceptual lines, and a width thereof is preferably as close to zero as practically achievable.

Further, an exposed surface of each triangular prism 300 (an inclined surface of the triangular prism) is preferably a mirror-finished surface as much as practically achievable. This is for the purpose of minimizing a loss of light quantity caused by unnecessary scattering when light is deflected and concentrated in a predetermined direction due to a difference in refractive index at an interface between the exposed surface and air.

FIG.3(b) is a cross-sectional view taken along a section orthogonal to a longitudinal direction of each unit triangular prism 300. In this cross-sectional view, a portion hatched with dots represents a solid portion, and a white portion represents a void portion (i.e., an exposed portion).

An apex angle (reference numeral 350) of the unit triangular prism 300 in the present invention refers to an angle $\theta2$ illustrated in the cross-sectional view of FIG. 3(b). Specifically, the apex angle refers to the apex angle $\theta2$ of the solid triangular portion (the portion hatched with dots) in the cross-section of the unit triangular prism 300 shown in the figure. In the present invention, as shown in the figure, a shape of the unit triangular prism 300 in the cross-section orthogonal to the longitudinal direction thereof is preferably an isosceles triangle.

A preferred shape of the unit triangular prism 300 is an isosceles triangle (including an equilateral triangle) in a cross-section orthogonal to a longitudinal direction thereof (a direction of the ridge). A height h is $3\mu m$ to $24\mu m$, preferably $4\mu m$ to $21\mu m$, and more preferably $5\mu m$ to $16\mu m$, and a pitch P2 is $7\mu m$ to 27um, preferably $9\mu m$ to $22\mu m$, and more preferably $11\mu m$ to $18\mu m$. Although the shape is not limited to an isosceles triangle, the reason why the isosceles triangle is preferred is that it facilitates cutting and processing when a desired array of the unit triangular prisms is machined with a single-crystal diamond tool in a manufacturing process of a roll mold. Further, these numerical ranges are obtained from a practical standpoint, with a limiting factor being the minimization of the manufacturing cost of the roll mold described later.

A thickness of the light introduction layer composed of the unit triangular prisms 300 is a value obtained by adding a slight value $+\alpha$ to the height h of the unit triangular prism. This $+\alpha$ corresponds to a thickness of what is called a "residual film" in the art (which is integrated with the light introduction layer and formed of the same material), provided on a bottom surface of the unit triangular prism, and has a value of approximately $1\mu m$ to 3um. This value is derived from an empirical rule that without this residual film, the cross-sectional shape of the unit triangular prism is easily distorted, making it difficult to accurately maintain the shape during mass production.

An apex angle (reference numeral 350) of the unit triangular prism 300 is preferably 60° to 95°, more preferably 70° to 95°, and most preferably 80° to 93°. This value is a preferred value determined from the viewpoint of desired optical characteristics and the manufacturing cost of the roll mold described later.

(Refractive Index of Light Introduction Layer)

A refractive index n2 of a resin (cured resin) of the light introduction layer composed of the array of the unit triangular prisms 300 satisfies a relationship of $n0 \geq n2\$$ with respect to the refractive index n1 of the resin (cured resin) of the light extraction layer described above and a refractive index n0 of a light waveguide layer (a layer between the light extraction layer and the light introduction layer) to be described later, and preferably satisfies $1.50 \leq n2 \leq 1.64$. The upper and lower limits here are preferred values determined from the viewpoint of desired optical characteristics and the practical problems pointed out in the description of the light extraction layer 100.

(Material and Formation Method of Light Introduction Layer)

The material to be used is basically the same as the material for the light extraction layer 100 described above, and any UV-curable transparent resin can be preferably used as long as it has the refractive index defined by the present invention. Note that "transparent" here does not refer to transparency in a strict sense, but means a state in which the haze value is low (e.g., 2% to 3% or less) and can be considered transparent in practice. For manufacturing, a known roll-to-roll continuous production method (see FIG.5 for reference) is preferably employed. A resin constituting each of the light extraction layer and the light introduction layer is applied in an uncured state onto one surface of a base film or a base sheet constituting the light waveguide layer to form a coating layer. A roll mold having a fine concavo-convex pattern (a concavo-convex pattern having ridge-like protrusions with a triangular cross-section) on a surface thereof is pressed against the surface of the coating layer to transfer the concavo-convex pattern of the roll mold, and the transferred portions are sequentially irradiated with ultraviolet (UV) rays, whereby the layers are preferably formed. Note that the principle of the process for transferring the concavo-convex pattern of the roll mold can also be applied to a micro-imprinting process of a plastic film. Therefore, it is also conceivable to form the light extraction layer and the light introduction layer having desired surface shapes by micro-imprinting onto surfaces of a three-layer structure film in which transparent thermoplastic resin films respectively constituting the light extraction layer and the light introduction layer are bonded in advance to the base film constituting the light waveguide layer.

(Basic Function of Light Introduction Layer)

On the premise that the technical scope of the present invention is not limited at all, the light introduction layer 120 exhibits a function of deflecting (lifting) light, which is emitted from a light guide plate (not shown) at an emission angle of 70° to 80°, so as to bring the light closer to a vertical direction and causing the light to propagate to a light waveguide layer 110 described later.

(Characteristics of Light Waveguide Layer)

The light waveguide layer 110 of the light-collecting auxiliary film 10 constitutes an intermediate layer between the light extraction layer 100 and the light introduction layer 120. The light waveguide layer 110 does not contain any light-diffusing fine particles. From the viewpoint of light transmittance of the light waveguide layer 110, the resin constituting the light waveguide layer 110 is preferably a transparent resin such as polyethylene terephthalate (PET), polycarbonate (PC), polymethyl methacrylate (PMMA), or a styrene-methyl methacrylate copolymer, and preferably has a refractive index suitable for the present invention. However, from the viewpoints of reliability and availability, a transparent optical PET film is preferably used. The optical PET film used in the present invention is preferably of a type whose surface has been treated by plasma treatment, chemical treatment, or the like to be easily bonded.

A thickness of the light waveguide layer 110 is naturally determined by a relationship between an overall thickness required for the light-collecting auxiliary film 10 and the thicknesses of the light extraction layer 100 and the light introduction layer 120 described above. From the viewpoint of improving front-view luminance, it can be said that the thickness is preferably as small as possible. However, since a slight curing shrinkage occurs when the UV-curable resins coated on both surfaces of the base film (which serves as the light waveguide layer) are cured, it is preferable for the base film to have a thickness sufficient to counteract the curing shrinkage. The lower limit of the thickness is preferably approximately $15\mu m$ to 20um in view of the thicknesses of the light extraction layer and the light introduction layer. On the other hand, the upper limit is preferably approximately $200\mu m$ at maximum, in relation to the overall thickness required for the light-collecting auxiliary film 10.

The refractive index of the plastic constituting the light waveguide layer 110 is naturally determined once the type of plastic to be used is decided. In the present invention, an optical PET film is preferably used as described above, and the nominal refractive index thereof is 1.58.

The light waveguide layer 110 functions as a so-called base film in a manufacturing process of the light-collecting auxiliary film 10 of the present invention. After the light extraction layer 100 and the light introduction layer 120 are respectively formed on both surfaces thereof, the light waveguide layer 110 is configured to perform a function of transmitting light to the light extraction layer 100 while minimizing a reduction in the quantity of light incident from the light waveguide layer 110. An optical PET film (optical polyethylene terephthalate film) can be preferably used. In order to improve adhesion when a different resin is coated and bonded thereon, the optical PET film is surface-treated within a range that does not affect the bulk optical properties of the film. This surface treatment process is not included in the manufacturing process of the light-collecting auxiliary film 10 of the present invention; therefore, a commercially available optical PET film is preferably used for the light waveguide layer 110 of the light-collecting auxiliary film 10.

(Interrelationship between Arrangement Direction of Unit Concave Portions of Light Extraction Layer and Arrangement Direction of Unit Triangular Prisms of Light Introduction Layer)

FIG.4 illustrates a relationship (intersection angle) between an arrangement direction of the unit concave portions 200 (substantially inverted pyramids) constituting the light extraction layer 100 on the light-emission surface side and a longitudinal direction of the unit triangular prisms (convex stripes) constituting the light introduction layer 120 on the light-incident surface side in the light-collecting auxiliary film 10 of the present invention. In FIG.4, valley lines 340 in an array of the unit triangular prisms 300 of the light introduction layer 120 are indicated by dashed lines. This figure illustrates a case where these two directions intersect at 45°. This value of 45° does not have to be an exact value, and a slight error is permissible within a range in which the object of the present invention can be achieved.

(Interrelationship between Pitch P1 of Light Extraction Layer and Pitch P2 of Light Introduction Layer)

Controlling the interrelationship between the pitch P1 of the light extraction layer and the pitch P2 of the light introduction layer is important for suppressing the occurrence of self-moiré. While general moiré phenomenathat is, moiré occurring between different optical elements-are well known, there appears to be no prior art in the field of edge-lit backlight technology that addresses the elimination of a self-moiré phenomenon occurring solely within a single optical element itself as a technical problem. Although the aforementioned Patent Document 1 aims to eliminate moiré phenomena, the moiré phenomena addressed therein are not self-moiré phenomena.

The inventors expressed the relationship between the pitch P1 of the light extraction layer and the pitch P2 of the light introduction layer using mathematical formulas for predicting the occurrence of general moiré phenomena. However, when actual values for P1 and P2 were substituted into these formulas, it was discovered that the predicted results did not match the measured results.

Through extensive research, the inventors found that under the condition where the arrangement direction of the unit concave portions 200 of the light extraction layer 100 intersects with the arrangement direction of the unit triangular prisms 300 of the light introduction layer 120, predicted results and measured results match well when actual values of P1 and P2 are substituted into the following moiré equations independently discovered by the inventors. It was also found that when these relationships satisfy all the following conditions, the self-moiré phenomenon can be suppressed, as will be apparent from the examples described later.

Specifically, the light-collecting auxiliary film of the present invention that suppresses the self-moiré phenomenon is characterized in that the relationship between the pitch P1 of the light extraction layer and the pitch P2 of the light introduction layer satisfies P1 > P2 and all of the following conditions:

$$[\text{Math. 1}] \quad |D1 - D2| \leq 200 \ \mu m$$

In the foregoing Math. 1, D1 and D2 satisfy the following Math. 2a and Math. 2b, respectively:

$$[\text{Math. 2}] \quad D1 = |P1m \times \delta1 \div (\delta1 - P1m)|$$

$$[\text{Math. 2b}] \quad D2 = |P1m \times \delta2 \div (\delta2 - P1m)|$$

In the foregoing Math. 2a and Math. 2b, P1m > P2m, where P1m satisfies the following Math. 3a, and P2m satisfies the following Math. 3b:

$$[\text{Math. 3a}] \quad P1m = P1 \times \sin(0.25 \times \pi)$$

$$[\text{Math. 3b}] \quad P2m = P2 \div 2$$

In the foregoing Math. 2a and Math. 2b:

1. $\delta1$ is a sum of P1m and the smaller of $\delta a$ and $\delta b$, where $\delta a$ is an absolute value of a difference between P1m and a value obtained by multiplying P2m by an integer part (with rounding up)of a value obtained by dividing P1m by P2m, and $\delta b$ is an absolute value of a difference between P1m and a value obtained by multiplying P2m by an integer part (with rounding down) of a value obtained by dividing P1m by P2m; and

2. $\delta2$ is a sum of P1m and a smaller value obtained when comparing twice the smaller of $\delta a$ and $\delta b$ with the larger of $\delta a$ and $\delta b$.

(Interrelationship of Refractive Indices of Respective Layers)

In the light-collecting auxiliary film according to the present invention, a relationship between a refractive index n1 of the light extraction layer (a refractive index of a resin constituting the light extraction layer), a refractive index n0 of the light waveguide layer (a refractive index of a resin constituting the light waveguide layer) which is in planar contact with one surface of the light extraction layer, and a refractive index n2 of the light introduction layer (a refractive index of a resin constituting the light introduction layer) which is in planar contact with the opposite surface of the light waveguide layer, satisfies n0 ≥ n1 and n0 ≥ n2. Preferably, the refractive index n1 is in a range of $1.50 \leq n1 \leq 1.64\$$, and the refractive index n2 is in a range of $1.50 \leq n2 \leq 1.64$.

3. Roll Mold Supporting Manufacturing Method of Light-Collecting Auxiliary Film

The objects of the present invention include solving the problem of reducing the cost of the light-collecting auxiliary film. It goes without saying that the manufacturing cost of the light-collecting auxiliary film reflects costs incurred in upstream manufacturing processes. From this viewpoint, a roll-to-roll method is preferably employed for manufacturing the light-collecting auxiliary film of the present invention as described in detail below, and a roll mold is preferably used in the method. Since the roll mold is a precision component requiring advanced manufacturing technology, the cost thereof significantly affects the manufacturing cost of the light-collecting auxiliary film. Therefore, the effects and constraints on the shape of the light-collecting auxiliary film of the present invention caused by the roll mold used for manufacturing the light-collecting auxiliary film will be described below. However, the scope of the present invention is not limited by the content described below, and the manufacturing of the light-collecting auxiliary film of the present invention is not limited to the use of the following roll mold.

The roll mold used in the examples of the present invention was prepared by a lathe machining method described in detail below. Other conceivable methods include a photolithographic etching method, an electron beam machining method, and a direct laser machining method. However, the photolithographic etching method and the electron beam machining method lead to high costs for creating a large-area roll mold, which contradicts the objective of cost reduction of the present invention and is therefore not preferable from a practical standpoint. Although it may be possible to increase the area by lowering the precision of the concavo-convex shape of the mold, the precision of a shape obtained by transferring the concavo-convex shape using such a low-precision mold would also be low, and thus it is considered impractical for manufacturing an optical film requiring a high-precision surface shape. Regarding the direct laser machining method, although there is a possibility of use considering the recent increase in speed of laser machining machines, since the laser spot diameter is at least approximately $10\mu m$, this machining method is also considered impractical for manufacturing an optical film requiring a high-precision surface shape. For these reasons, at present, it is considered that a lathe cutting method, which provides high precision and cost feasibility, can be preferably used as a machining method contributing to cost reduction, which is one of the objects of the present invention.

(Manufacturing Method for Roll Mold)

FIG.6 is a conceptual diagram of a general method for manufacturing a roll mold used in the production of the light-collecting auxiliary film 10 of the present invention by a cutting method. FIG.6(a) is a conceptual diagram illustrating a state where a cutting tool 640 having a single-crystal diamond bit 660 at a tip thereof cuts a roll mold, on which a metal thin film 680 (typically a copper metal film) is formed, at an apex angle θ. FIG.6(b) is an enlarged cross-sectional view illustrating a state where the single-crystal diamond bit 660 cuts the thin film 680. (Note that although the content is outside the scope of the present invention, it is provided to explain a preferred range of the concavo-convex shape on the surface of the light-collecting auxiliary film of the present invention; therefore, reference numerals for components other than the main components are omitted.)

First, a metal film (typically a copper or nickel film) is formed on a surface of a metal drum (typically iron or SUS) which serves as a core roll of a predetermined size, primarily by an electroplating method. The film thickness at this stage is approximately 300um to 500um. Concurrently, a single-crystal diamond at a tip of a diamond tool is machined into a desired shape (in this embodiment, an isosceles triangle having an apex angle θ). Next, the machined single-crystal diamond is bonded to a tip of a shank, and a surface thereof is ground to achieve a desired shape. The shank is manufactured with a shape matching a cutting machine.

Taking a case where copper is deposited on the surface as an example, manufacturing of a roll mold by lathe cutting is generally performed as follows. First, the copper film formed on the surface of the metal drum in the above process is linearly scraped off at a high speed (by fixing the position of the single-crystal diamond tool and rotating the roll mold at a high speed) using a single-crystal diamond tool having a predetermined tip angle, thereby engraving a plurality of concave stripes extending parallel in one direction on the surface. After completing one full circumference of the drum, the position of the single-crystal diamond tool is moved in a lateral direction (a direction along an axis of the drum) by a distance corresponding to a pitch $P\$$, and the same operation is repeated for another full circumference. This process is repeated. Therefore, a smaller drum diameter (i.e., a shorter cutting line length) results in less wear on the tip and side surfaces of the single-crystal diamond tool, which suppresses unnecessary scattering and reduces processing costs.

In this case, the concave stripes correspond to convex stripes of a resin that is pressed into the concave stripes during a roll-to-roll manufacturing process. As described in the examples below, the convex stripes have a triangular cross-section with a depth on the order of $9\mu m$ to $21\mu m$ and a base on the order of $18\mu m$ to 42um. Accordingly, the size of the tip of the single-crystal diamond tool that penetrates the copper plating layer is also on this order. Since the optical performance of the light-collecting auxiliary film of the present invention depends on the accuracy of the surface shape, the cutting process requires high-precision control.

Furthermore, if the apex angle of the tip of the single-crystal diamond tool is an obtuse angle, for example, 100° or more, sufficient grip (ingress) of the tool cannot be ensured during the cutting process. This causes the tip of the single-crystal diamond tool to slide on the surface of the copper plating, inducing vibration of the single-crystal diamond tool and resulting in a decrease in the smoothness of inclined surfaces of protrusions formed in the mold. Consequently, the smoothness of the inclined surfaces of the inverted pyramids and triangular prisms decreases. This also imposes practical constraints on the sizes of the protrusions (and the sizes of the inverted pyramids and triangular prisms formed by transferring the protrusions).

Furthermore, the surface shapes of the light extraction layer and the light introduction layer ultimately formed on the surface of the light-collecting auxiliary film are affected by the convex stripes having a triangular cross-section or the pyramid-shaped protrusions formed on the drum mold. Since an intersection (transition portion) between one surface and an adjacent surface of the surface shape must be as sharp (narrow) as possible for the optical characteristics required of the light-collecting auxiliary film, the tip shape of the single-crystal diamond tool to be used requires nanometer-level precision.

Regarding the ease of processing when forming the concavo-convex stripes on the mold surface, in the case of forming the triangular prism layer on the light-incident surface side of the light-collecting auxiliary film of the present invention, a unit triangular prism having an apex angle of 90° (base angle: 45°) is the easiest to process, and a bilaterally symmetric shape is particularly easy to process. If the apex angle is sharper than 90°, it is not preferable because the durability of the tool (single-crystal diamond bit) is likely to become an issue, thereby increasing processing difficulty. Conversely, if the apex angle is more obtuse than 90°, the cutting performance of the tool (single-crystal diamond bit) decreases (i.e., the ingress into the deposited copper metal film becomes poor), which tends to cause tool vibration and lead to a poor surface finish. Therefore, the apex angle of the tip of the single-crystal diamond bit (i.e., the apex angle of the unit triangular prism formed on the light-incident surface side of the light-focusing auxiliary film in the present invention) is preferably 60° to 130°, more preferably 80° to 100°, and even more preferably 80° to 95°. For any of these values, the angular error is preferably within ± 1°.

When forming unit concave portions having a substantially inverted quadrangular-pyramidal shape (substantially inverted pyramidal shape) on the light-emission surface side of the light-collecting auxiliary film of the present invention, the mold processing conditions become more stringent and difficult than those for forming the unit triangular prisms. The reason lies in the following process steps. Specifically, when machining protrusions corresponding to the inverted pyramid recesses, first, as a first step, the tip of a single-crystal diamond bit is pressed against (indented into) the surface of the copperplated drum while rotating the drum to perform cutting, thereby forming ridges of concave stripes having a triangular cross-section. Next, as a second step, ridges of concave stripes having a triangular cross-section are formed in a direction orthogonal to the direction of the concave stripes formed in the first step by a similar operation. As a result, an inverted quadrangular-pyramidal (inverted pyramidal) unit concave portion is formed at each intersection of the concave stripes formed in the first step and the concave stripes formed in the second step, and portions not removed by cutting become quadrangular-pyramidal (pyramidal) protrusions. In this second step, the load applied to the tip of the single-crystal diamond bit is not a static load but a repeated impact load. That is, a repeated impact load is applied as the bit alternately passes through solid portions and void portions of the concave stripes formed in the first step. Consequently, the processing conditions become more stringent than those for the aforementioned unit triangular prisms, and durability issues of the tool are more likely to occur. For this reason, if the apex angle (i.e., the apex angle of the substantially inverted quadrangular-pyramidal unit concave portion formed on the light-emission surface side of the light-collecting auxiliary film in the present invention) is sharper than 90° or an obtuse angle of 100° or more, the processing difficulty increases. Therefore, such an apex angle is preferably 70° to 130°, and more preferably 80° to 100°. For any of these values, the angular error is preferably within ± 1°.

(Backlight Unit and Liquid Crystal Display Device Equipped with Light-Collecting Auxiliary Film of the Present Invention)

FIG.7(a) is a conceptual cross-sectional view of a liquid crystal display device 70 equipped with the light-collecting auxiliary film of the present invention.

Reference numeral 700 denotes a liquid crystal panel unit, reference numeral 720 denotes a laminated unit of two orthogonally stacked BEFs (reference numeral 724 in FIG.7(b)) and a light diffusion film (reference numeral 722 in FIG.7(b)) laminated thereon, reference numeral 10 denotes the light-collecting auxiliary film of the present invention, reference numeral 740 denotes a light guide plate unit having a reflective sheet on a lower surface side thereof, and reference numeral 760 denotes a white LED. The white LEDs 760 are arranged discretely in a row along a side surface of the light guide plate unit 740 in the depth direction of the drawing. The light-collecting auxiliary film 10 of the present invention is interposed between an upper surface (light-emission surface) of the light guide plate unit 740 and the laminated unit 720. The light-collecting auxiliary film 10 has a function of collecting light from the upper surface (light-emission surface) of the light guide plate unit 740 and deflecting (changing) the propagation direction to be more vertical (upward in the drawing), thereby changing light propagation characteristics to match, as much as possible, the two orthogonally stacked BEFs 724 laminated thereon.

FIG.7(b) is a conceptual diagram illustrating a stacked state of respective layers with the liquid crystal panel unit 700 in FIG.7(a) removed. The layers are stacked in the order of a reflective sheet 744, a light guide plate 742, the light-collecting auxiliary film 10 of the present invention, two orthogonally stacked BEFs 724, and a light diffusion film 722 from the bottom toward the top.

(Evaluation Method for Light-Collecting Auxiliary Film of the Present Invention)

FIG.8 conceptually illustrates a stacking configuration for evaluating characteristics of the light-collecting auxiliary film 10 of the present invention. It shows the stacking of respective layers with the two orthogonally stacked BEFs 724 and the light diffusion film 722 in FIG. 7(b) removed. The layers are stacked in the order of the reflective sheet 744, the light guide plate 742, and the light-collecting auxiliary film 10 of the present invention from the bottom toward the top.

Specific evaluation methods and the like will be described in the examples below.

<Examples>

Examples will be described below.

1. Preparation of Light Extraction Layer of Light-Collecting Auxiliary Film

(Base Film)

An optical PET film having a thickness of 50um (e.g., DIAFOIL T600E50) manufactured by Mitsubishi Chemical Corporation) was used as a base film. Note that any film having equivalent characteristics can be preferably used regardless of the manufacturer, provided that the effect does not significantly differ.

(UV-Curable Resin)

A UV-curable resin used was prepared by adding a photoinitiator to a UV-curable acrylate monomer (97wt%) such that the refractive index nD after curing matched the values shown in the table below. The refractive index nD represents a value measured with an Abbe refractometer (NAR-1T SOLID), manufactured by Atago Co., Ltd.).

(Roll Mold)

A roll mold (thickness of a copper metal thin film on a surface: 300um to 500$\mu$m) was used, which had surface concavo-convexities such that geometric characteristics of unit concave portions were those shown in FIG.2, and an apex angle $\theta 1$ and a pitch P1 were values shown in Table 1 below.

(Film Formation Method)

Basically, a film formation method using a commonly used roll-to-roll process was employed. Specifically, a roll of a base film was set in the afore-mentioned roll-to-roll manufacturing system, and the operation of the system was started. Next, an acrylate-based UV-curable resin prepared to have a refractive index after curing matching the values shown in the table below was continuously applied onto the base film by a predetermined method common to a roll-to-roll process to form a coating layer. While forming the coating layer, the roll mold was sequentially pressed against the coating film and irradiated with ultraviolet (UV) rays to cure the resin, thereby forming a light extraction layer. Thus, a two-layer structure film having the light extraction layer formed on one surface was produced and wound up (to produce a first roll). It was confirmed that the apex angle $\theta 1$ and the pitch P1 were accurately transferred by magnifying the transferred surface 2,400 times using a laser microscope (VK-X1000, manufactured by Keyence Corporation).

2. Preparation of Light Introduction Layer of Light-Collecting Auxiliary Film

A UV-curable resin used was the same as that used for the light extraction layer described above. Similarly, the refractive index after curing was measured with an Abbe refractometer (NAR-1T SOLID), manufactured by Atago Co.,

Ltd.). A roll mold different from the one for the light extraction layer was used, the roll mold being capable of forming a triangular prism array composed of a plurality of ridge-like protrusions having an isosceles triangular cross-section.

3. Determination Method

1) Determination Method for Self-Moiré

The determination was basically performed by visual inspection. One end of a sample of the light-collecting auxiliary film of the present invention was held with fingers of one hand, and the arm was extended to hold the sample up to an indoor fluorescent lamp to determine whether moiré was visually recognizable to the naked eye. A specific determination method is as shown in the conceptual diagram of FIG. 10. In a dark room, an end portion of the light-collecting auxiliary film 10 of the present invention was held with one hand, and the film was held vertically at a middle position between the naked eye 1010 and a fluorescent lamp 1020 located approximately 60 cm away from the naked eye. Transmitted moiré was visually checked from the light extraction layer (the layer having inverted pyramids) side. Next, the film was moved directly below the eye and was arranged such that the center of the film, held horizontally, was at a position approximately 30 cm diagonally from the fluorescent lamp 1020 and the naked eye 1010. Light from the fluorescent lamp 1020 was diagonally applied to the surface of the light extraction layer of the film, and reflected moiré was checked by its reflection. A case where neither transmitted moiré nor reflected moiré was visually recognizable was evaluated as "○" (Good). Next, in this determination, if moiré (transmitted moiré and/or reflected moiré) was visible, the film was placed horizontally on the light guide plate 742 (including the light reflection sheet 744) of a backlight unit used for luminance measurement such that the center of the film was located approximately 30 cm diagonally from the naked eye 1010 at the same angle as described above (see the stacking diagram in FIG. 8). Further visual determination was performed. A case where moiré (transmitted moiré) was not visible both when the light extraction layer (inverted pyramid layer) faced upward and when the light introduction layer (triangular prism layer) faced upward was evaluated as "△" (Acceptable), and a case where moiré was visible was evaluated as "×" (Poor).

At this time, a relationship between the arrangement direction of the unit concave portions (the same direction as the ridges) of the light extraction layer and the arrangement direction of the unit triangular prisms (the same direction as the ridges) of the light introduction layer was as shown in FIG.4. Furthermore, both the cross-sectional shape of the portion formed by the solid portions of two adjacent unit concave portions (the cross-sectional shape shown in FIG.2) and the cross-sectional shape of the unit triangular prism (the cross-sectional shape shown in FIG.3) were isosceles triangles.

2) Evaluation Method for Front-View Luminance

Evaluation was performed by mounting the light-collecting auxiliary film of the present invention on a 9-inch edge-lit backlight unit using white LEDs as a light source (see FIG. 7(b) for the configuration). Two orthogonally stacked BEFs used were BEF-4DT manufactured by 3M, and a light diffusion film laminated thereon was D159GS manufactured by Tsujiden Co., Ltd. and supplied by the applicant.

The white LEDs were driven at a constant current of 200 mA with a maximum power supply voltage of 17 V.

A 5 cm quadrangular region centered on the center point of the emission surface of the backlight unit was divided into 64 × 64 cells (the size of one cell was approximately 0.78 mm quadrangular), and measurement was performed with the shutter speed set to "Auto" (high dynamic sampling mode). The average of front-view luminance values at 64 × 64 = 4096 points was defined as the front-view luminance value. A luminance meter used was a two-dimensional luminance/chromaticity measurement device (ACE3-2000, manufactured by Highland Co., Ltd.).

In the following evaluation method, an optical axis direction of light emitted from the white LEDs arranged on the side surface of the light guide plate of the edge-lit backlight was parallel to a direction of the ridges (longitudinal direction) of the unit triangular prisms in the light introduction layer of the light-collecting auxiliary film of the present invention arranged on the light guide plate. When the shape characteristics and the combination of refractive indices of the light-collecting auxiliary film of the present invention were those described in Table 1 below, light orientation characteristics of light emitted from the upper surface of the light guide plate toward the light-collecting auxiliary film were such that a contour plot at the light-emission surface of the light-collecting auxiliary film became the contour plot shown in FIG.9.

[Table 1]

| Light Extraction Layer | | Light Waveguide Layer | | Light Introduction Layer | |
|---|---|---|---|---|---|
| Apex Angle θ1 [°] | Refractive Index n1 | Thickness [μm] | Refractive Index n0 | Apex θ2 [°] | Refractive Index n2 |
| 80 | 1.52 | 50 | 1.58 | 90 | 1.58 |

2. Shape Characteristics, Refractive Indices, and Optical Property Evaluation Results of Light-Collecting Auxiliary Films used in Examples and Comparative Examples:

The shape characteristics, refractive indices, and optical property evaluation results of the light-collecting auxiliary films used in the Examples and Comparative Examples are shown in the following tables.

1) Determination Results of Self-Moiré

[Table 2]

| (In the case of an intersection angle of 45°: The intersection angle was measured using a microscope (VHX-8000), manufactured by Keyence Corporation). | | | | | | |
|---|---|---|---|---|---|---|
| | Light Extraction Layer Apex Angle (°) Pitch ($\mu$m) | | Light Introduction Layer Apex Angle (°) Pitch ($\mu$m) | | Calculated Result ($\mu$m) | Moiré Determination Result | |
| | Apex Angle $\theta 1$ | Pitch P1 | Apex Angle $\theta 2$ | Pitch P2 | \|D1-D2\| | | |
| Comp.1 | 90 | 100 | 93 | 18 | 1939.0 | × | Comparative Example |
| Comp.2 | 90 | 50 | 93 | 18 | 969.5 | × | |
| Ex.1 | 90 | 42 | 93 | 18 | 163.4 | ○ | Example |
| Ex.2 | 80 | 42 | 93 | 18 | 163.4 | ○ | |
| Ex.3 | 90 | 42 | 80 | 18 | 163.4 | ○ | |
| Ex.4 | 90 | 42 | 80 | 42 | 29.7 | ○ | |
| Ex.5 | 90 | 100 | 80 | 42 | 272.2 | △ | |
| Comp.3 | 90 | 50 | 80 | 18 | 969.5 | × | Comparative Example |
| Ex.6 | 90 | 50 | 90 | 25 | 291.4 | △ | Example |
| (Note 1: "Calculation" in the above calculation results refers to the calculation based on the formulas first devised by the inventor and described in the specification and claims for self-moiré under the conditions that: the arrangement direction of the unit concave portions of the light extraction layer (the same direction as the ridges) and the arrangement direction of the unit triangular prisms of the light introduction layer (the same direction as the ridges) intersect each other at 45° and both the cross-sectional shape of the portion formed by the solid portions of two adjacent unit concave portions (the cross-sectional shape shown in FIG.2) and the cross-sectional shape of the unit triangular prism (the cross-sectional shape shown in FIG. 3) are isosceles triangles.) (Note 2: The symbols ○, △, and × in the column of Moiré Determination Result represent the actual determination results obtained by the determination method described in the section of "Determination Method for Self-Moiré" above.) | | | | | | |

Next, actual determination results obtained using the afore-mentioned determination method and calculation results obtained by the above calculation formulas are compared in the following table to confirm that self-moiré does not appear even when the intersection angle is varied by $\pm$ 3.0° from 45.0°.

[Table 3]

| (In the cases of intersection angles of 42.0°, 45.0°, and 48.0°: The intersection angles were measured using a microscope (VHX-8000, manufactured by Keyence Corporation). Note that the intersection angle refers to the angle shown in FIG. 4.) | | | | | | |
|---|---|---|---|---|---|---|
| Light Extraction Layer Apex Angle (°) Pitch (μm) | | Light Introduction Layer Apex Angle (°) Pitch (μm) | | Intersection Angle (°) | Calculation Result (μm) | Moiré Determination Result |
| Apex Angle θ1 | Pitch P1 | Apex Angle θ2 | Pitch P2 | | \|D1 - D2\| | |
| 90 | 42 | 93 | 13 | 42 | | ○ | Example |
| 90 | 42 | 93 | 13 | 45 | 76.4 | ○ | Example |
| 90 | 42 | 93 | 13 | 48 | | ○ | Example |

(Note 1: "Calculation" in the above calculation results refers to the calculation based on the formulas first devised by the inventor and described in the specification and claims for self-moiré under the conditions that: the arrangement direction of the unit concave portions of the light extraction layer (the same direction as the ridges) and the arrangement direction of the unit triangular prisms of the light introduction layer (the same direction as the ridges) intersect each other at 42.0°, 45.0°, and 48.0°, respectively; and both the cross-sectional shape of the portion formed by the solid portions of two adjacent unit concave portions (the cross-sectional shape shown in FIG. 2) and the cross-sectional shape of the unit triangular prism (the cross-sectional shape shown in FIG. 3) are isosceles triangles.)

(Note 2: The symbols ○, △, and × in the column of Measured Moiré Determination Result represent the actual determination results obtained by the determination method described in the section of "Determination Method for Self-Moiré" above.)

2) Determination Results for Front-View Luminance at Light-Emission Surface of Edge-lit Backlight Equipped with Light-Collecting Auxiliary Film of the Present Invention

In the table below, the refractive index of the light extraction layer was n1 = 1.52, and the refractive index of the light introduction layer was n2 = 1.52. Furthermore, the refractive index of the light waveguide layer was n0 = 1.58 with a thickness of 50um, and the thickness of the residual film on each of the light extraction layer and the light introduction layer was 1μm. In all of the following results, luminance non-uniformity was not visible to the naked eye.

[Table 4]

| Light Extraction Apex Angle (°) Pitch (μm) | | Light Introduction Layer Apex Angle (°) Pitch (μm) | | Calculation Result (μm) | Moiré Determination Result | Measured Front-View Luminance Result | Simulation Result | |
|---|---|---|---|---|---|---|---|---|
| Apex Angle θ1 | Pitch P1 | Apex Angle θ2 | Pitch P2 | \|D1-D2\| | | [cd/m²] | [cd/m²] | |
| 80 | 42 | 90 | 18 | 163.4 | ○ | 11500.4 | | |
| 90 | 42 | 90 | 18 | 163.4 | ○ | 11447.5 | | Example |
| 100 | 42 | 90 | 18 | 163.4 | ○ | | 11479.0 | |
| 110 | 42 | 90 | 18 | 163.4 | ○ | | 11379.3 | Comparative Example |
| 120 | 42 | 90 | 18 | 163.4 | ○ | | 11308.3 | |

(Note: Optical simulation was performed using LightTools illumination design software (manufactured by Synopsys, Inc.). The validity of the simulation results was ensured by setting parameters so that the error between measured values and simulated values matched the values in Table 6 described later.)

Looking at the above summary table, it is clearly recognized that the front-view luminance of the comparative examples group tends to decrease compared to the examples group, with the boundary being where the apex angle of the light extraction layer is between 100° and 110°.

In the table below, the refractive index of the light extraction layer was n1 = 1.58, and the refractive index of the light introduction layer was n2 = 1.52. Furthermore, the refractive index of the light waveguide layer was n0 = 1.58 with a thickness of 50µm, and the thickness of the residual film on each of the light extraction layer and the light introduction layer was 1µm. In all of the following results, luminance non-uniformity was not visible to the naked eye.

[Table 5]

| Light Extraction Apex Angle (°) Pitch (µm) | | Light Introduction Layer Apex Angle (°) Pitch (µm) | | Calculation Result (µm) | Moiré Determination Result | Measured Front-View Luminance Result | Simulation Result | |
|---|---|---|---|---|---|---|---|---|
| Apex Angle θ1 | Pitch P1 | Apex Angle θ2 | Pitch P2 | \|D1-D2\| | | [cd/m$^2$] | [cd/m$^2$] | |
| 80 | 42 | 90 | 18 | 163.4 | ○ | 11370.5 | | Example |
| 90 | 42 | 90 | 18 | 163.4 | ○ | 11432.0 | | |
| 100 | 42 | 90 | 18 | 163.4 | ○ | | 11310.2 | |
| 110 | 42 | 90 | 18 | 163.4 | ○ | | 11217.4 | Comparative Example |
| 120 | 42 | 90 | 18 | 163.4 | ○ | | 11187.3 | |
| (Note: Optical simulation was performed using LightTools illumination design software (manufactured by Synopsys, Inc.). The validity of the simulation results was ensured by setting parameters so that the error between measured values and simulated values matched the values in Table 6 described later.) | | | | | | | | |

Looking at the above table, it is clearly recognized that the front-view luminance of the comparative examples group tends to decrease compared to the group of examples, with the boundary being where the apex angle of the light extraction layer is between 100° and 110°.

All of the aforementioned simulations were performed using an optical simulator (LightTools illumination design software, manufactured by Synopsys, Inc.). The validity of the simulation results was ensured by setting various parameters so that an error (error relative to a measured value) between a measured front-view luminance value and a simulated value was within 1%, as shown in Table 6 below. In this case, the refractive index n0 of the light waveguide layer was 1.58, the thickness thereof was 50µm, and the thickness of the residual film on each of the light extraction layer and the light introduction layer was 1µm.

[Table 6]

| Light Extraction Layer Apex Angle (°) Pitch (µm) | | | Light Introduction Layer Apex Angle (°) Pitch (µm) | | | Measured Value | Simulation Result | Error (%) |
|---|---|---|---|---|---|---|---|---|
| Apex Angle θ1 | Pitch P1 | Refractive Index n1 | Apex Angle θ2 | Pitch P2 | Refractive Index n2 | [cd/m2] | [cd/m2] | |
| 90 | 42 | 1.52 | 90 | 18 | 1.52 | 11447.5 | 11447.5 | 0.00 |
| 90 | 42 | 1.52 | 90 | 18 | 1.58 | 11224.6 | 11154.8 | -0.63 |
| 90 | 42 | 1.58 | 90 | 18 | 1.58 | 11225.6 | 11121.9 | -0.93 |
| 90 | 42 | 1.58 | 90 | 18 | 1.52 | 11432.0 | 11325.6 | -0.94 |
| 90 | 42 | 1.64 | 90 | 18 | 1.64 | 11063.1 | 11048.5 | -0.13 |

The following table shows front-view luminance measured at a light-emission surface of a light-collecting auxiliary film (the thickness of the residual film on each of the light extraction layer and the light introduction layer was approximately 1µm) in which the apex angle of the inverted pyramids of the light extraction layer was set to 80°, the apex angle of the triangular prisms (isosceles triangles) of the light introduction layer was set to 90°, and the refractive indices of the respective layers were varied as shown in the table. The measurement was performed by placing the light-collecting auxiliary film horizontally on a light guide plate whose light-emission surface had a front-view luminance of 749.9 cd/m^2.

[Table 7]

| Light Extraction Layer | | Light Waveguide Layer | Light Introduction Layer | | Measured Front-View Luminance Result | |
|---|---|---|---|---|---|---|
| Apex Angle θ1 (°) | 80 | Thickness 50 μm | Apex Angle θ2 (°) | 90 | | |
| Pitch P1 (μm) | 42 | | Pitch P2 (μm) | 18 | | |
| Refractive Index n1 | | Refractive Index n0 | Refractive Index n2 | | [cd/m2] | |
| 1.52 | | 1.58 | 1.52 | | 11500.4 | Example |
| 1.52 | | 1.58 | 1.58 | | 11331.0 | |
| 1.58 | | 1.58 | 1.58 | | 11292.3 | |
| 1.58 | | 1.58 | 1.52 | | 11370.5 | |
| 1.64 | | 1.58 | 1.64 | | 11264.1 | Comparative Example |

The following table shows the front-view luminance measured at a light-emission surface of a light-collecting auxiliary film (the thickness of the residual film on each of the light extraction layer and the light introduction layer was approximately 1μm) in which the apex angle of the inverted pyramids of the light extraction layer was set to 90°, the apex angle of the triangular prisms (isosceles triangles) of the light introduction layer was set to 90°, and the refractive indices of the respective layers were varied as shown in the table. The measurement was performed by placing the light-collecting auxiliary film horizontally on a light guide plate whose light-emission surface had a front-view luminance of 749.9 cd/m^2.

[Table 8]

| Light Extraction Layer | | Light Waveguide Layer | Light Introduction Layer | | Measured Front-View Luminance Result | |
|---|---|---|---|---|---|---|
| Apex Angle θ1 (°) | 90 | Thickness 50 μm | Apex Angle θ2 (°) | 90 | | |
| Pitch P1 (μm) | 42 | | Pitch P2 (μm) | 18 | | |
| Refractive Index n1 | | Refractive Index n0 | Refractive Index n2 | | [cd/m2] | |
| 1.52 | | 1.58 | 1.52 | | 11447.5 | Example |
| 1.52 | | 1.58 | 1.58 | | 11224.6 | |
| 1.58 | | 1.58 | 1.58 | | 11225.6 | |
| 1.58 | | 1.58 | 1.52 | | 11432.0 | |
| 1.64 | | 1.58 | 1.64 | | 11063.1 | Comparative Example |

The present invention has been described in detail above based on representative embodiments, examples, and comparative examples. However, various modifications can be made without departing from the object and spirit of the present invention.

[Industrial Applicability]

According to the present invention, a light-collecting auxiliary film having the following features can be obtained:

1) The number of elements constituting the light-collecting auxiliary film is small;

2) No light-diffusing fine particles are contained in any of the elements constituting the light-collecting auxiliary film;

3) Desired optical characteristics are achieved while the occurrence of self-moiré is suppressed; and

4) The film is suitable for mass production by a roll-to-roll method and is low in cost.

As a result, the present invention is expected to reduce the manufacturing cost of an edge-lit backlight unit equipped with the light-collecting auxiliary film and to meet the demand for lower cost in liquid crystal display devices incorporating the same.

[Explanation of Reference Numbers]

10: Light-collecting auxiliary film
100: Light extraction layer
110: Light waveguide layer
120: Light introduction layer
200: Unit concave portion (substantially inverted pyramid)
220: Ridge of unit concave portion (substantially inverted pyramid)
230: Pitch of unit concave portion (substantially inverted pyramid) (P1)
240: Bottom center point of unit concave portion
250: Apex angle of triangular solid region (θ1)
260: Triangular solid region occupied by solid portions of adjacent unit concave portions
300: Unit triangular prism
320: Ridge of unit triangular prism
330: Pitch of unit triangular prism (P2)
340: Valley line formed by adjacent unit triangular prisms
350: Apex angle of unit triangular prism (θ2)
500: Roll-to-roll manufacturing system (reference information)
520: UV-curable resin
540: Roll mold
560: Unwinding roll
562: Take-up roll
580: UV irradiation device
620: Roll mold
640: Shank of cutting tool
660: Single-crystal diamond
680: Workpiece to be cut (copper plating layer)
700: Liquid crystal panel unit
720: Laminated unit of BEFs(two-sheet cross-type) and light diffusion film (manufactured by the applicant)
722: Light diffusion film(manufactured by the applicant) 724: BEF (two-sheet cross-type)
740: Light guide plate unit(a light refraction sheet and a light
guide plate)
742: Light guide plate
744: Reflective sheet
760: Discrete white LED
1010: Naked eye
1020: Indoor fluorescent lamp

**Claims**

1. A light-collecting auxiliary film to be interposed between a light-emission surface of a light guide plate and a light-incident surface of a brightness enhancement film (BEF) in an edge-lit backlight unit using discrete LED point light sources, the light-collecting auxiliary film comprising:

   a light guide layer comprising a light-transmissive base film;
   a light extraction layer formed on one surface of the light guide layer and having a plurality of unit concave portions in the shape of inverted quadrangular pyramids; and
   a light introduction layer formed on the other surface of the light guide layer and having a plurality of unit triangular prisms extending parallel in one direction,
   wherein the light extraction layer constitutes a light-emission surface, prism surfaces of the plurality of unit triangular prisms constituting the light introduction layer constitute a light-incident surface, none of the light extraction layer, the light guide layer, and the light introduction layer contains light-diffusing fine particles, a relationship between a pitch P1 of the plurality of unit concave portions and a pitch P2 of the plurality of unit triangular prisms satisfies P1 > P2, and
   wherein all of the following conditions:

   $$[\text{Math. 1}] \quad |D1 - D2| \leq 200 \ \mu m$$

   In the foregoing Math. 1, D1 and D2 satisfy the following Math. 2a and Math. 2b, respectively:

   $$[\text{Math. 2a}] \quad D1 = |P1m \times \delta1 \div (\delta1 - P1m)|$$

   $$[\text{Math. 2b}] \quad D2 = |P1m \times \delta2 \div (\delta2 - P1m)|$$

   In the foregoing Math. 2a and Math. 2b, P1m > P2m, where P1m satisfies the following Math. 3a, and P2m satisfies the following Math. 3b:

   $$[\text{Math. 3a}] \quad P1m = P1 \times \sin(0.25 \times \pi)$$

   $$[\text{Math. 3b}] \quad P2m = P2 \div 2$$

   In the foregoing Math. 2a and Math. 2b:

   1. $\delta1$ is a sum of P1m and the smaller of $\delta a$ and $\delta b$, where $\delta a$ is an absolute value of a difference between P1m and a value obtained by multiplying P2m by an integer part (with rounding up)of a value obtained by dividing P1m by P2m, and $\delta b$ is an absolute value of a difference between P1m and a value obtained by multiplying P2m by an integer part (with rounding down) of a value obtained by dividing P1m by P2m; and

   2. $\delta2$ is a sum of P1m and a smaller value obtained when comparing twice the smaller of $\delta a$ and $\delta b$ with the larger of $\delta a$ and $\delta b$.

2. A light-collecting auxiliary film to be interposed between a light-emitting surface of a light guide plate in an edge-lit backlight unit using discrete LED point light sources and a light-incident surface of a brightness enhancement film (BEF), the light-collecting auxiliary film comprising:

a light waveguide layer consisting of a translucent base film;
a light extraction layer formed on one surface of the light waveguide layer and having a plurality of inverted quadrangular pyramidal unit recesses; and
a light introduction layer formed on the other surface of the light waveguide layer and having a plurality of unit triangular prisms extending parallel in one direction, wherein the light extraction layer constitutes a light-emitting surface, wherein prism surfaces of the plurality of unit triangular prisms constituting the light introduction layer constitute a light-incident surface, wherein none of the light extraction layer, the light waveguide layer, and the light introduction layer contain light-diffusing fine particles, wherein an intersection angle between a direction of ridgelines of the plurality of unit recesses and a direction of ridgelines of the plurality of unit triangular prisms falls within a range of 42° to 48°, and wherein moiré caused by the plurality of unit recesses and the plurality of unit triangular prisms is not visible to the naked eye.

3. The light-collecting auxiliary film according to claim 2, wherein a relationship between a pitch P1 of the plurality of unit recesses and a pitch P2 of the plurality of unit triangular prisms satisfies P1 > P2.

4. The light-collecting auxiliary film according to claim 1 or 3, **characterized in that** an apex angle of the plurality of unit concave portions is less than 100°.

5. The light-collecting auxiliary film according to claim 4, **characterized in that** when a refractive index of a resin constituting the light extraction layer is n1, a refractive index of a resin constituting the light introduction layer is n2, and a refractive index of a resin constituting the light waveguide layer is n0, a relationship of $n0 \geq n1$ and $n0 \geq n2$ is satisfied.

6. The light-collecting auxiliary film according to claim 5, **characterized in that** a range of the refractive index n1 is $1.50 \leq n1 \leq 1.64$, and a range of the refractive index n2 is $1.50 \leq n2 \leq 1.64$.

7. The light-collecting auxiliary film according to claim 6, **characterized in that** an apex angle of the plurality of unit triangular prisms is 95° or less.

8. The light-collecting auxiliary film according to claim 7, **characterized in that** the apex angle of the plurality of unit concave portions is 80° or more and 95° or less.

9. An edge-lit backlight unit comprising a plurality of point light sources, a light guide plate, and a brightness enhancement film (BEF), **characterized in that** at least one light-collecting auxiliary film according to any one of claims 1 to 8 is interposed between the light guide plate and the brightness enhancement film (BEF).

10. The edge-lit backlight unit according to claim 9, **characterized in that** the plurality of point light sources are arranged on at least one edge side of the light guide plate.

11. A liquid crystal display device, **characterized by** comprising the edge-lit backlight unit according to claim 10 and a liquid crystal display panel.

**Amended claims under Art. 19.1 PCT**

1. A light-collecting auxiliary film to be interposed between a light-emission surface of a light guide plate and a light-incident surface of a brightness enhancement film (BEF) in an edge-lit backlight unit using discrete LED point light sources, the light-collecting auxiliary film comprising:

   a light guide layer comprising a light-transmissive base film;
   a light extraction layer formed on one surface of the light guide layer and having a plurality of unit concave portions in the shape of inverted quadrangular pyramids; and
   a light introduction layer formed on the other surface of the light guide layer and having a plurality of unit triangular prisms extending parallel in one direction, wherein the light extraction layer constitutes a light-emission surface, prism surfaces of the plurality of unit triangular prisms constituting the light introduction layer constitute a light-incident surface, none of the light extraction layer, the light guide layer, and the light introduction layer contains light-diffusing fine particles, a relationship between a pitch P1 of the plurality of unit concave portions and a pitch P2 of the plurality of unit triangular prisms satisfies P1 > P2, and an intersection angle between a direction of ridges of the plurality of unit concave portions and a direction of ridges of the plurality of unit triangular prisms falls within a range of 42° to 48°, and
   wherein all of the following conditions:

   $$[\text{Math. 1}] \quad |D1 - D2| \leq 200 \ \mu m$$

   In the foregoing Math. 1, D1 and D2 satisfy the following Math. 2a and Math. 2b, respectively:

   $$[\text{Math. 2a}] \quad D1 = |P1m \times \delta1 \div (\delta1 - P1m)|$$

   $$[\text{Math. 2b}] \quad D2 = |P1m \times \delta2 \div (\delta2 - P1m)|$$

   In the foregoing Math. 2a and Math. 2b, P1m > P2m, where P1m satisfies the following Math. 3a, and P2m satisfies the following Math. 3b:

   $$[\text{Math. 3a}] \quad P1m = P1 \times \sin(0.25 \times \pi)$$

   $$[\text{Math. 3b}] \quad P2m = P2 \div 2$$

   In the foregoing Math. 2a and Math. 2b:

   1) $\delta1$ is a sum of P1m and the smaller of $\delta a$ and $\delta b$, where $\delta a$ is an absolute value of a difference between P1m and a value obtained by multiplying P2m by an integer part (with rounding up) of a value obtained by dividing P1m by P2m, and $\delta b$ is an absolute value of a difference between P1m and a value obtained by multiplying P2m by an integer part (with rounding down) of a value obtained by dividing P1m by P2m; and
   2) $\delta2$ is a sum of P1m and a smaller value obtained when comparing twice the smaller of $\delta a$ and $\delta b$ with the larger of $\delta a$ and $\delta b$.

2. The light-collecting auxiliary film according to claim 1, **characterized in that** the value of P2 is within a range of 7pm to 42um, and the value of P1 is within a range satisfying the above Math. 1.

3. The light-collecting auxiliary film according to claim 1, **characterized in that** the value of P1 is within a range of 19pm to 65um, and the value of P2 is within a range satisfying the above Math. 1.

4. The light-collecting auxiliary film according to any one of claims 1 to 3, **characterized in that** an apex angle of the plurality of unit concave portions is less than 100°.

5. The light-collecting auxiliary film according to claim 4, **characterized in that** when a refractive index of a resin constituting the light extraction layer is n1, a refractive index of a resin constituting the light introduction layer is n2, and a refractive index of a resin constituting the light waveguide layer is n0, a relationship of $n0 \geq n1$ and $n0 \geq n2$ is satisfied.

6. The light-collecting auxiliary film according to claim 5, **characterized in that** a range of the refractive index n1 is $1.50 \leq n1 \leq 1.64$, and a range of the refractive index n2 is $1.50 \leq n2 \leq 1.64$.

7. The light-collecting auxiliary film according to claim 6, **characterized in that** an apex angle of the plurality of unit triangular prisms is 95° or less.

8. The light-collecting auxiliary film according to claim 7, **characterized in that** the apex angle of the plurality of unit concave portions is 80° or more and 95° or less.

9. The light-collecting auxiliary film according to claim 1, **characterized in that** at least one of the light extraction layer and the light introduction layer has a residual film.

10. The light-collecting auxiliary film according to claim 9, **characterized in that** a thickness of the residual film is 1 to 3um.

11. An edge-lit backlight unit comprising a plurality of point light sources, a light guide plate, and a brightness enhancement film (BEF), **characterized in that** at least one light-collecting auxiliary film according to any one of claims 1 to 10 is interposed between the light guide plate and the brightness enhancement film (BEF).

12. The edge-lit backlight unit according to claim 11, **characterized in that** the plurality of point light sources are arranged on at least one edge side of the light guide plate.

13. A liquid crystal display device, **characterized by** comprising the edge-lit backlight unit according to claim 12 and a liquid crystal display panel.

10

100
110
120

Fig. 1

(b)

200
260
220
240
250
230

(a)

230
220
200
230
220
240

(c)

230
200
220
260
250
240

Fig. 2

**(a)**

**(b)**

**Fig. 3**

**(a)**

**(b)** **(c)** **(d)**

**Fig. 4**

500

520    540

560    562

580

**Fig. 5**

(a)    (b)

620    680

660

640

(c)

640

660

**Fig. 6**

**(a)**

**(b)**

**Fig. 7**

**Fig. 8**

**Fig. 9**

**(a)**

**(b)**

**Fig. 10**

## INTERNATIONAL SEARCH REPORT

| International application No. |
| --- |
| **PCT/JP2024/022025** |

### A. CLASSIFICATION OF SUBJECT MATTER

*G02F 1/13357*(2006.01)i; *F21S 2/00*(2016.01)i; *G02B 5/04*(2006.01)i; *G02F 1/1335*(2006.01)i; *F21Y 115/10*(2016.01)n
FI:   G02F1/13357; F21S2/00 431; G02B5/04 A; G02B5/04 F; G02F1/1335; F21Y115:10

According to International Patent Classification (IPC) or to both national classification and IPC

### B. FIELDS SEARCHED

Minimum documentation searched (classification system followed by classification symbols)

G02F1/13357; F21S2/00; G02B5/04; G02F1/1335; F21Y115/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2022/250006 A1 (KEIWA INC.) 01 December 2022 (2022-12-01) paragraphs [0047]-[0062], [0079]-[0094], fig. 3-6(a) | 1-8 |
| Y | | 9-11 |
| Y | WO 2022/133080 A1 (BRIGHTVIEW TECHNOLOGY, INC.) 23 June 2022 (2022-06-23) paragraphs [0041]-[0045], [0053]-[0055], fig. 3A, 3F | 9-11 |
| E, X | WO 2024/147283 A1 (KEIWA INC.) 11 July 2024 (2024-07-11) paragraphs [0024]-[0104], fig. 1-6 | 1-11 |
| A | US 2009/0080188 A1 (HON HAI PRECISION INDUSTRY CO., LTD.) 26 March 2009 (2009-03-26) entire text, all drawings | 1-11 |

☐ Further documents are listed in the continuation of Box C.      ☑ See patent family annex.

| | |
| --- | --- |
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **26 August 2024** | **03 September 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
**Information on patent family members**

International application No.

**PCT/JP2024/022025**

| Patent document cited in search report | | | Publication date (day/month/year) | Patent family member(s) | | | Publication date (day/month/year) |
|---|---|---|---|---|---|---|---|
| WO | 2022/250006 | A1 | 01 December 2022 | US | 2024/0094446 | A1 | |
| | | | | paragraphs [0060]-[0077], [0095]-[0107], fig. 3-6A | | | |
| | | | | CN | 117321458 | A | |
| | | | | TW | 202303191 | A | |
| WO | 2022/133080 | A1 | 23 June 2022 | JP | 2024-500716 | A | |
| | | | | paragraphs [0041]-[0045], [0053]-[0055], fig. 3A, 3F | | | |
| | | | | US | 2022/0197086 | A1 | |
| | | | | EP | 4264343 | A1 | |
| | | | | CN | 116783521 | A | |
| | | | | KR | 10-2023-0117438 | A | |
| | | | | CN | 214540112 | U | |
| WO | 2024/147283 | A1 | 11 July 2024 | (Family: none) | | | |
| US | 2009/0080188 | A1 | 26 March 2009 | CN | 101393288 | A | |
| | | | | entire text, all drawings | | | |

Form PCT/ISA/210 (patent family annex) (July 2022)

34

**REFERENCES CITED IN THE DESCRIPTION**

**Patent documents cited in the description**

- JP 2023078133 A

- WO 2010029910 A